(19) Europäisches Patentamt
European Patent Office
Office européen des brevets

(11) **EP 2 596 341 B1**

(12) **EUROPÄISCHE PATENTSCHRIFT**

(45) Veröffentlichungstag und Bekanntmachung des Hinweises auf die Patenterteilung:
**24.01.2018 Patentblatt 2018/04**

(51) Int Cl.:
***G01N 23/222*** *(2006.01)*

(21) Anmeldenummer: **11763578.9**

(22) Anmeldetag: **19.07.2011**

(86) Internationale Anmeldenummer:
**PCT/DE2011/001476**

(87) Internationale Veröffentlichungsnummer:
**WO 2012/010162 (26.01.2012 Gazette 2012/04)**

(54) **NEUTRONEN-AKTIVIERUNGS-ANALYSE MIT STANDARTISIERTEM PROBENBEHÄLTER ZUR BESTIMMUNG DES NEUTRONENFLUSSES**

NEUTRON ACTIVATION ANALYSIS WITH STANDARDISED PROBE CONTAINER FOR DETERMINING THE NEUTRON FLUX

ANALYSE PAR ACTIVATION NEUTRONIQUE AVEC PORTE-ÉCHANTILLON STANDARDISÉ POUR LA DÉTERMINATION DU FLUX DE NEUTRONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.07.2010 DE 102010031844**

(43) Veröffentlichungstag der Anmeldung:
**29.05.2013 Patentblatt 2013/22**

(73) Patentinhaber: **Forschungszentrum Jülich GmbH 52425 Jülich (DE)**

(72) Erfinder:
• MAUERHOFER, Eric
52428 Jülich (DE)
• KETTLER, John
52066 Aachen (DE)

(56) Entgegenhaltungen:
**EP-A1- 1 882 929 JP-A- 2006 118 904**

• **KETTLER ET AL: "PGNAA for Toxid Element Determination in Nuclear Waste Drums", TRANSACTIONS OF THE AMERICAN NUCLEAR SOCIETY, AMERICAN NUCLEAR SOCIETY, LA GRANGE PARK, IL, US, Bd. 101, 1. Januar 2009 (2009-01-01), Seiten 100-101, XP009154023, ISSN: 0003-018X**
• **KHELIFI R ET AL: "Flux calculation in LSNAA using an 241Am-Be source", JOURNAL OF RADIOANALYTICAL AND NUCLEAR CHEMISTRY, KLUWER ACADEMIC PUBLISHERS, DO, Bd. 274, Nr. 3, 13. August 2007 (2007-08-13), Seiten 639-642, XP019554288, ISSN: 1588-2780, DOI: 10.1007/S10967-006-6950-9**
• **GARDNER R P ET AL: "Single Peak Versus Library Least-Squares Analysis Methods for the PGNAA Analysis of Vitrified Waste", APPLIED RADIATION AND ISOTOPES, ELSEVIER, OXFORD, GB, Bd. 48, Nr. 10-12, 12. Oktober 1997 (1997-10-12), Seiten 1331-1335, XP004101719, ISSN: 0969-8043, DOI: 10.1016/S0969-8043(97)00127-9**

**Beschreibung**

Die Erfindung betrifft ein Verfahren zur zerstörungsfreien Elementanalyse großvolumiger Proben mit Neutronenstrahlung.

Stand der Technik

Beim Umgang und speziell bei der Lagerung gefährlicher Stoffe ist es wichtig zu wissen, mit welchen Stoffen man es genau zu tun hat. Besondere Schwierigkeiten bereiten in diesem Zusammenhang Mischabfälle, etwa Abfallfässer, die ein Sammelsurium von mit verschiedenen Schadstoffen belasteten Gegenständen beherbergen. Ohne das Wissen, welche Schadstoffe vorhanden sind, ist es gefährlich, mit dem Abfall in Kontakt zu treten. Um sich dieses Wissen zu verschaffen, muss man aber gerade mit dem Abfall in Kontakt treten. Auf Grund der notwendigen Schutzmaßnahmen ist es sehr aufwändig und teuer, für die Analyse etwa einen Bohrkern aus einem Fass zu entnehmen, in dem radioaktive Abfälle in Beton vergossen sind.

Einen Ausweg bietet die Neutronenaktivierungsanalyse. Dabei wird die Probe mit Neutronen durchstrahlt. Die Atomkerne in der Probe werden hierdurch zur Aussendung von Gammastrahlung angeregt, die für jedes Element eine charakteristische Signatur zeigt. Durch Auswertung der von der Probe abgestrahlten Gammastrahlung kann somit zerstörungsfrei untersucht werden, welche Elemente in der Probe vorhanden sind.

Speziell für die Untersuchung großvolumiger Objekte ist aus der WO 01/07888 A2 ein Verfahren zur Bestimmung von Metallen, die durch den amerikanischen "Resource Conservation and Recovery Act" (RCRA) als besonders gefährlich eingestuft sind, in nichtradioaktiven großvolumigen Proben bekannt. Dabei wird die Probe gepulster Neutronenstrahlung ausgesetzt. Aus dem Spektrum der von der Probe ausgesendeten Gammastrahlung wird die durch den Neutronenbeschuss bewirkte prompte und verzögerte Gammastrahlung der Atomkerne in der Probe ausgewertet. Diese wird zur Bestimmung der in der Probe vorhandenen Elemente herangezogen.

Nachteilig erfordert die Quantifizierung der Elemente in der Probe zeitaufwändige und rechenintensive Monte-Carlo-Simulationen, so dass das Verfahren für Reihenmessungen vieler Proben mit hohem Durchsatz ungeeignet ist.

Aufgabe und Lösung

Es ist daher die Aufgabe der Erfindung, ein Verfahren zur zerstörungsfreien Elementanalyse großvolumiger Proben zur Verfügung zu stellen, das schneller durchzuführen und somit für routinemäßige Reihenmessungen mit hohem Durchsatz geeignet ist.

Diese Aufgabe wird erfindungsgemäß gelöst durch ein Verfahren gemäß Hauptanspruch. Weitere vorteilhafte Ausgestaltungen ergeben sich aus den darauf rückbezogenen Unteransprüchen.

Gegenstand der Erfindung

Im Rahmen der Erfindung wurde ein Verfahren zur zerstörungsfreien Elementanalyse großvolumiger Proben entwickelt. Dabei wird die Probe gepulst mit schnellen Neutronen bestrahlt und die von der Probe ausgesendete Gammastrahlung gemessen. Die Menge an einem Element, die in der Probe enthalten ist, wird nach Abzug des Untergrundsignals aus der Fläche des Photopeaks ausgewertet, den das Element in einer Zählrate-Energie-Darstellung hervorruft.

Erfindungsgemäß wird die von einem Teilbereich der Probe, dessen Zusammensetzung bekannt ist, ausgesendete Gammastrahlung zur Bestimmung des Neutronenflusses am Ort der Probe ausgewertet. Als ein solcher Teilbereich wird eine metallische Umhüllung der Probe gewählt. Gerade chemische und radioaktive Abfälle werden häufig in standardisierte Stahlfässer verpackt, die bevorzugt für die Messung des Neutronenflusses herangezogen werden können. Der Begriff des Neutronenflusses umfasst sowohl langsame als auch schnelle Neutronen.

Das erfindungsgemäße Verfahren eignet sich beispielsweise auch zur Elementanalyse und Qualitätskontrolle von Proben oder Materialien aus dem Bereich der Recyclingindustrie. So können beispielsweise Abfälle aus den Bereichen der Glas-, Kunststoff- oder Metallindustrie, Elektro-/Elektronikschrottindustrie, Ersatzbrennstoffindustrie, Baumischabfallerzeugung, Gewerbeindustrie, Autoindustrie, Abraumindustrie, Abfälle mit Metallen/Metallverbindungen und Übergangsmetallen/Übergangsmetallverbindungen (z. B. Antimon, Beryllium, Kobalt, Flussspat, Gallium, Germanium, Indium, Magnesium, Niob, Metalle der Platingruppe, Tantal, Wolfram), industriell mineralischen Abfälle oder auch Abfälle, die Metalle der Seltenen Erden beinhalten, ausgewertet werden.

Die Menge an einem Element, die in der Probe enthalten ist, wird nach Abzug des Untergrundsignals aus der Fläche des Photopeaks ausgewertet, den das Element in einer Zählrate-Energie-Darstellung hervorruft. Diese Netto-Photopeakfläche $P(E_\gamma)$ eines Peaks, der um die Gamma-Energie $E_\gamma$ herum zentriert ist, ist gegeben durch

$$P(E_\gamma) = \frac{m}{M} \cdot A \cdot \sigma(E_\gamma) \cdot \varepsilon(E_\gamma) \cdot \Phi \cdot f_t.$$

Hierin ist M die bekannte molare Masse des Elements, A ist die Avogadrokonstante, und $\sigma(E_\gamma)$ ist der ebenfalls bekannte Wirkungsquerschnitt des Elements für die Photonenproduktion. $f_t$ ist ein Zeitfaktor, der davon abhängt, ob die Gammastrahlung von langsamen oder schnellen Neutronen angeregt wurde und ob es sich um prompte oder verzögerte Gammastrahlung handelt. $f_t$ hängt somit nur von der Art der Bestrahlung, von der Art der durchgeführten Messung und bei Bestrahlung mit verzögerten Neutronen zusätzlich noch von der Halbwertszeit der erzeugten Nuklide ab. Somit ist $f_t$ in jedem Fall bekannt. Um die in der Probe insgesamt vorhandene Masse m des gesuchten Elements bestimmen zu können, sind somit nur noch Photopeak-Effizienz $\varepsilon(E_\gamma)$ und der Neutronenfluss $\Phi$ am Ort der Probe als Unbekannte zu bestimmen.

Es wurde erkannt, dass die Auswertung der Gammastrahlung aus einem Bereich der Probe mit bekannter Zusammensetzung (Kalibrationsbereich) experimentell einfach, nachvollziehbar und zugleich präzise auf den Neutronenfluss $\Phi$ am Ort der Probe führt. Da die Zusammensetzung des Kalibrationsbereichs bekannt ist, ist bekannt, welche materialspezifischen Gamma-Energien aus diesem Bereich abgestrahlt werden. Somit kann die Gammastrahlung aus dem Kalibrationsbereich von der Gammastrahlung aus dem Rest der Probe unterschieden werden. $P(E_\gamma)$ für die Strahlung aus dem Kalibrationsbereich ist daher bekannt und kann in obige Gleichung eingesetzt werden. Zusätzlich zu den Größen M, A, $\sigma(E_\gamma)$ und $f_t$ ist die Masse m des Kalibrationsbereichs bekannt, so dass nur noch die Photopeak-Effizienz $\varepsilon(E_\gamma)$ bestimmt werden muss, um die Gleichung nach dem Neutronenfluss $\Phi$ am Ort der Probe aufzulösen. Die Photopeak-Effizienz $\varepsilon(E_\gamma)$ des Kalibrationsbereichs (Stahlfasses) hängt ebenfalls nur von der als bekannt vorausgesetzten Zusammensetzung und Geometrie des Kalibrationsbereichs ab und ist daher ebenfalls zugänglich. Sie ist insbesondere dann eine feste Größe, wenn eine Reihe von Proben zu untersuchen ist, die jeweils mit einem standardisierten Stahlfass umhüllt sind. Das Stahlfass kann dann jeweils als Kalibrationsbereich fungieren.

Damit sind alle Größen bekannt, die zur Bestimmung von $\Phi$ erforderlich sind. Dieser Fluss ist bei Bestrahlung mit langsamen Neutronen in der gesamten Probe homogen. Für schnelle Neutronen ist der Fluss im Inneren der Probe durch Abschirmeffekte vermindert. Diese Abschirmeffekte sind jedoch bekannt und können herauskorrigiert werden, um einen mittleren schnellen Neutronenfluss zu bestimmen. Mit diesem mittleren schnellen Neutronenfluss kann das Vorkommen des in der Probe gesuchten Elements quantifiziert werden.

Nach dem Stand der Technik konnte der Neutronenfluss am Ort der Probe lediglich durch Monte-Carlo-Simulationen abgeschätzt werden. Dies ist ein iteratives und sehr rechenintensives Verfahren. Für eine großvolumige Probe, wie etwa ein Abfallfass, waren nach der eigentlichen Messung auf Standard-PC-Hardware Rechenzeiten von bis zu einem Tag nur für die Abschätzung des Neutronenflusses erforderlich. Erfindungsgemäß wird der Neutronenfluss nicht abgeschätzt, sondern tatsächlich gemessen. Dies vermeidet den hohen Rechenaufwand und steigert zugleich die Genauigkeit des Endergebnisses.

Der auf diese Weise gemessene Neutronenfluss $\Phi$ ist genau genommen nicht der wahre Neutronenfluss, sondern ein effektiver Neutronenfluss in dem Sinne, dass er für Orte, von denen aus nur ein geringer Anteil der ausgesendeten Gammastrahlung den Detektor erreicht, vermindert ist. Ist beispielsweise ein mit Beton ausgefülltes Stahlfass zu untersuchen und ist eine Seitenfläche des Fasses dem Detektor zugewandt, so wird Gammastrahlung, die auf der dem Detektor abgewandten Seitenfläche des Fasses ausgesendet wird, durch die Betonfüllung abgeschwächt. Für die Quantifizierung von Elementen aus der Netto-Photopeakfläche $P(E_\gamma)$ ist aber gerade dieser effektive Neutronenfluss maßgeblich, weil die gleichen Abschirmungseffekte auch bei der Bestimmung von $P(E_\gamma)$ wirken.

Es ist dann nur noch die Photopeak-Effizienz $\varepsilon(E_\gamma)$ des gesuchten Elements in der Probe unbekannt. Diese hängt von der geometrischen Verteilung des Elements in der Probe sowie von der Abschirmung, die die vom Element ausgesendete Gammastrahlung durch die großvolumige Probe erfährt, ab.

Zur Bestimmung dieser Verteilung wird die Probe um eine Achse gedreht, und die Gammastrahlung in Abhängigkeit des Drehwinkels gemessen. Gammastrahlung, die sich in Abhängigkeit des Drehwinkels nicht ändert, geht auf Elemente zurück, die in der Probe mehr oder weniger homogen verteilt sind. Gammastrahlung, die eine klare Winkelabhängigkeit zeigt, geht auf örtlich begrenze Einschlüsse in der Probe zurück. Die Probe kann auch nacheinander um zwei voneinander linear unabhängige Achsen gedreht werden, um auch Einschlüsse zu erfassen, die ausschließlich entlang der ersten Achse konzentriert sind und daher bei Drehung um diese Achse keine Drehwinkelabhängigkeit zeigen.

Typischerweise wird die Probe zwischen acht jeweils um 45° auseinander liegenden Winkelpositionen gedreht. In jeder Winkelposition wird typischerweise um etwa 20 Minuten lang gemessen.

Vorteilhaft wird aus der Abhängigkeit der Gammastrahlung vom Drehwinkel die radiale Verteilung eines Elements in der Probe relativ zur Drehachse ausgewertet. Beispielsweise kann für die Verteilung ein Ansatz mit freien Parametern gemacht werden, und die sich aus dieser Verteilung ergebende Drehwinkelabhängigkeit kann durch Veränderung der Parameter an die experimentell erhaltene Drehwinkelabhängigkeit gefittet werden.

In einer besonders vorteilhaften Ausgestaltung der Erfindung wird die Probe für die Bestimmung der Photopeak-Effizienz des Elements als aus dem Element bestehende, abgeschirmte Punktquelle angenähert. Die Photopeak-Effizienz $\varepsilon(E_\gamma)$ lässt sich dann durch numerische Integration berechnen nach der Gleichung

$$\varepsilon(E_\gamma) = \frac{1}{\displaystyle\sum_{i=1}^{N}\omega_i} \cdot \sum_{i=1}^{N}\left(\begin{array}{l}\exp\left(-\left(\dfrac{\mu}{\rho}\right)_s \cdot \rho_s \cdot d_{s,i}\right) \cdot \exp\left(-\left(\dfrac{\mu}{\rho}\right)_m \cdot \rho_m \cdot d_{m,i}\right) \cdot \\[2mm] \cdot\, \varepsilon_0\left(E_\gamma\right) \cdot \left(\dfrac{d_0}{d_i}\right)^2 \cdot \omega_i \end{array}\right)$$

Diese Gleichung ist zur Berechnung der Photopeak-Effizienz $\varepsilon(E_\gamma)$ für alle Fälle gültig, in denen eine von einem Kalibrationsbereich (Stahlfass) umhüllte Probe mit langsamen und/oder schnellen Neutronen aktiviert wird. Hierin ist N die Zahl der Punkte i, in die das Volumen der Probe diskretisiert wurde. Je größer N ist, desto genauer wird das Ergebnis, desto länger dauert jedoch auch die Berechnung. $d_{m,i}$ und $d_{s,i}$ sind die Wegstrecken, die die vom Ort i ausgehende Gammastrahlung in der Matrix der Probe bzw. im Kalibrationsbereich (Stahlfass, das die Probe umhüllt) bis zum Detektor zurücklegen muss. $\rho_m$ und $\rho_s$ sind die Dichten der Matrix der Probe (Inhalt des Stahlfasses) bzw. des Kalibrationsbereichs (Stahlfass). $(\mu/\rho)_m$ und $(\mu/\rho)_s$ sind die Massenabschwächungskoeffizienten der Matrix der Probe bzw. des Kalibrationsbereichs (Stahlfasses). $\rho_m$ ist die mittlere scheinbare Dichte der Probe ohne Umhüllung. Sie kann erhalten werden als Quotient aus der Gesamtmasse der Probe abzüglich der bekannten Masse des Stahlfasses und dem Innenraumvolumen des Stahlfasses. In den in dieser Beschreibung aufgeführten Beispielen wird jeweils davon ausgegangen, dass im Interesse einer optimalen Raumausnutzung das Stahlfass jeweils vollständig mit der Matrix (etwa Betonfüllung) aufgefüllt ist. Bestehen in einer konkreten Anwendung diesbezüglich Zweifel, kann der Füllstand des Fasses vorab zerstörungsfrei mit digitalen Radiographiemethoden untersucht werden.

$\varepsilon_0(E_\gamma)$ ist die Photopeak-Effizienz einer Punktquelle im Zentrum der Probe, die sich im Abstand $d_0$ zum Detektor befindet. $d_i$ ist der Abstand des betrachteten Aufpunkts zum Detektor. Die Photopeak-Effizienz, $\varepsilon_0(E_\gamma)$, für eine Punktquelle im Abstand $d_0$ zum HPGe-Detektor wurde bis zu 10 MeV durch die Normierung einer Photopeak-Effizienzkurve bestimmt. Dazu wurde ein leeres Stahlfass mit Neutronen verschiedener Energien bestrahlt und die Photopeak-Fläche $P(E_\gamma)$ in Abhängigkeit von der Gamma-Energie $E_\gamma$ gemessen. Diese Kurve hat qualitativ einen ähnlichen Verlauf wie die Abhängigkeit der Photopeak-Fläche $P(E_\gamma)$ von der Gamma-Energie $E_\gamma$ für einen punktförmigen Prüfstrahler. Letztere Abhängigkeit wurde mit Prüfstrahlern für Gamma-Energien bis zu 1,4 MeV gemessen. Aus dem Vergleich der Kurvenverläufe ergibt sich die erforderliche Normierung.

$\omega_i$ ist der Wichtungsfaktor des Aufpunkts für die Aktivitätsverteilung. Er hängt im Wesentlichen von der Neutronenenergie ab: Mit langsamen Neutronen lässt sich die Probe durch Vielfachreflexion so ausleuchten, dass sie homogen durchstrahlt wird. Dann ist die Aktivitätsverteilung ebenfalls homogen, so dass alle Wichtungsfaktoren gleich 1 sind. Für schnelle Neutronen hängt der Wichtungsfaktor dagegen vom makroskopischen Wirkungsquerschnitt und der mittleren Weglänge der Neutronen im durchstrahlten Material ab:

$$\omega_i = \exp(-\Sigma_S \cdot l_{s,i}) \cdot \exp(-\Sigma_M \cdot l_{M,i})$$

Hierin sind $\Sigma_S$ und $\Sigma_M$ die makroskopischen Wirkungsquerschnitte für die Absorption schneller Neutronen im Kalibrationsbereich (Stahlfass) bzw. in der Matrix der Probe. Die Größen $l_{S,i}$ und $l_{M,i}$ sind die mittleren Wegstrecken, die die schnellen Neutronen (beispielsweise mit einer Energie von 14 MeV) im Kalibrationsbereich (Stahlfass) bzw. in der Matrix der Probe zurücklegen, bis sie schließlich am Ort i absorbiert werden und die Probe zur Aussendung von Gammastrahlung anregen. Der Wert $\Sigma_S$ wird aus der bekannten Materialzusammensetzung des Kalibrationsbereichs, bei einem Stahlfass überwiegend Eisen, bestimmt. Der Wert $\Sigma_M$ wird aus der Auswertung von zuvor durchgeführten Aktivierungsversuchen mit langsamen Neutronen und der mittleren Dichte des Messobjekts ermittelt. Es ist somit sinnvoll, zuerst die Daten auszuwerten, die sich auf eine Aktivierung durch langsame Neutronen beziehen, und dann die Daten auszuwerten, die sich auf eine Aktivierung durch schnelle Neutronen beziehen.

In einer weiteren vorteilhaften Ausgestaltung der Erfindung wird eine zuvor bestimmte radiale Verteilung des Elements in der Probe relativ zur Drehachse für die Näherung der Probe herangezogen. Ist beispielsweise durch die Messung bekannt, dass das Element homogen in der Probe verteilt ist, lässt sich die obige Näherung für seine Photopeak-Effizienz $\varepsilon(E_\gamma)$ weiter vereinfachen. Seine Gesamtmasse m in der Probe kann dann nach der vereinfachten Formel

$$m = \frac{M}{N \cdot \sigma(E_\gamma) \cdot \Phi} \cdot \frac{P(E_\gamma)}{\varepsilon_0(E_\gamma) \cdot F_0} \cdot \frac{\left(\frac{\mu}{\rho}\right)_m \cdot \rho_m \cdot V}{1 - \exp\left(\left(\frac{\mu}{\rho}\right)_m \cdot \rho_m \cdot (R - d_s)\right)} \cdot$$

$$\cdot \exp\left(\left(\frac{\mu}{\rho}\right)_s \cdot \rho_s \cdot d_s\right)$$

quantifiziert werden. Hierin ist V das Volumen und R der Radius der Probe (Fass mit Inhalt). $F_0$ ist die dem Detektor zugewandte Querschnittsfläche im Zentrum der Probe. $d_s$ ist die Dicke des Kalibrationsbereichs (Wandstärke des Stahlfasses). Eine homogene Verteilung des gesuchten Elements in der Probe ist beispielsweise dann gegeben, wenn die Probe gedreht wird und die Photopeak-Fläche $P(E_\gamma)$ nicht vom Drehwinkel $\theta$ abhängt.

In einer weiteren besonders vorteilhaften Ausgestaltung der Erfindung wird mit einer Annahme für eine in der Probe enthaltene Gamma-abschirmende Struktur die Fläche des Photopeaks berechnet. Der Vergleich dieser Fläche mit der aus Messergebnissen erhaltenen Fläche wird als Maß für die Gültigkeit der Annahme ausgewertet. Insbesondere kann die Gültigkeit der Annahme über einen Chi-Quadrat-Test der Abweichung zwischen der berechneten und der aus Messergebnissen erhaltenen Fläche des Photopeaks ausgewertet werden.

Beispielsweise kann zunächst die Annahme in den Raum gestellt werden, dass die Probe keine abschirmende Struktur enthält. Die auf der Basis dieser Annahme berechnete Fläche des Photopeaks wird mit der aus Messergebnissen erhaltenen Fläche verglichen, insbesondere mittels eines Chi-Quadrat-Tests. Ergibt sich keine signifikante Abweichung, so kann davon ausgegangen werden, dass keine abschirmenden Strukturen vorhanden sind. Zeigt sich hingegen eine signifikante Abweichung, erweist sich die Annahme als falsch, und es muss davon ausgegangen werden, dass abschirmende Strukturen vorhanden sind.

Wenn das gesuchte Element in der Probe homogen verteilt ist, kann für den Chi-Quadrat-Test beispielsweise die Prüfgröße

$$\chi^2 = \sum_{i,j} \frac{\left(\frac{P(E_\gamma, i)}{P(E_\gamma, j)} - q_{i,j}\right)^2}{q_{i,j}} \qquad \text{für } i \neq j$$

mit

$$q_{i,j} = \frac{\sigma(E_\gamma, i) \cdot \varepsilon_0(E_\gamma, i) \cdot (\mu/\rho)_{(m,j)}}{\sigma(E_\gamma, j) \cdot \varepsilon_0(E_\gamma, j) \cdot (\mu/\rho)_{(m,i)}} \cdot$$

$$\cdot \frac{1 - \exp\left(\left(-\frac{\mu}{\rho}\cdot\right)_{(m,j)} \cdot \rho_m \cdot (R - d_s)\right)}{1 - \exp\left(\left(-\frac{\mu}{\rho}\cdot\right)_{(m,i)} \cdot \rho_m \cdot (R - d_s)\right)} \cdot \frac{\exp\left(\left(\frac{\mu}{\rho}\right)_{(s,i)} \cdot \rho_s \cdot d_s\right)}{\exp\left(\left(\frac{\mu}{\rho}\right)_{(s,j)} \cdot \rho_s \cdot d_s\right)}$$

angesetzt werden.

Hierin beziehen sich i und j auf verschiedene $\gamma$-Linien ein und desselben Elements, das in der Probe quantifiziert werden soll. Der Faktor $q_{i,j}$ lässt sich aus der Randbedingung bestimmen, dass die Quantifizierung des Elements mit jeder der vom Element ausgesendeten $\gamma$-Linien jeweils zur gleichen insgesamt in der Probe vorhandenen Masse m des Elements führen muss. Ist diese Bedingung nicht erfüllt, zeigt sich dies im Chi-Quadrat-Test als Fehler.

Vorteilhaft wird daher das erwartete Verhältnis der Photopeakflächen, die von verschiedenen Gamma-Linien des in der Probe gesuchten Elements erzeugt werden, in der Annahme berücksichtigt.

Ist keine Gamma-abschirmende Struktur in der Probe vorhanden, wird die vom Vorkommen des Elements in der Probe ausgesendete Gammastrahlung lediglich durch die Matrix der Probe und durch die als Kalibrationsbereich dienende Umhüllung (Stahlfass) abgeschirmt. Bei homogener Verteilung des gesuchten Elements in der Probe, das zur Gammastrahlung angeregt wird, und einem homogenen Neutronenfluss in der Probe haben allein diese beiden Abschirmmechanismen einen Einfluss auf das Verhältnis zwischen $P(E_\gamma, i)$ und $P(E_\gamma, j)$. Die Prüfgröße $\chi^2$ misst nun, inwieweit das tatsächliche Verhältnis zwischen $P(E_\gamma, i)$ und $P(E_\gamma, j)$ vom in dieser Weise theoretisch vorhergesagten Verhältnis abweicht. Sind keine Gamma-abschirmenden Strukturen in der Probe vorhanden, ist der Wert von $\chi^2$ minimal. Liegt der Wert von $\chi^2$ unterhalb einer kritischen Schwelle, die vom gewählten Signifikanzniveau abhängt, ist also mit der dem gewählten Signifikanzniveau zugeordneten Wahrscheinlichkeit die Hypothese, dass die Probe keine Gamma-abschirmenden Strukturen enthält, richtig.

Abschirmende Strukturen können beispielsweise Primärverpackungen aus Blei und anderen abschirmenden Materialien sein, in die das gesuchte Element vor dem Verbringen in ein Stahlfass als Abfallbehälter eingehüllt wurde. Es kann sich aber auch um andere Gegenstände aus Blei und anderen für Gammastrahlung undurchdringlichen Materialien handeln, die zufällig in den Gamma-Strahlengang zwischen dem Vorkommen des gesuchten Elements in der Probe und dem Detektor geraten. Dies kommt häufig vor, wenn ein standardisiertes Stahlfass als Sammelabfallbehälter für ein ganzes Sammelsurium belasteter Gegenstände verwendet und anschließend etwa mit Beton vergossen wird.

Der Test, ob abschirmende Strukturen vorhanden sind, kann bei gedrehter Probe entweder für jeden Drehwinkel $\theta$ einzeln oder für die Summe bzw. das Integral über die unter allen Drehwinkeln $\theta$ durchgeführten Messungen vorgenommen werden.

Ist erkannt worden, dass eine Gamma-abschirmende Struktur in der Probe vorhanden ist, so kann in einer weiteren vorteilhaften Ausgestaltung der Erfindung die Fläche des Photopeaks auf der Basis eines parametrisierten Ansatzes für die Wirkung der Gamma-abschirmenden Struktur berechnet und die Abweichung dieser Fläche von der aus Messergebnissen enthaltenen Fläche durch Variation der Parameter minimiert werden. Die Parameter, für die die Abweichung ihr Minimum annimmt, können dann als charakteristische Werte der Gamma-abschirmenden Struktur angenommen werden. Beispielweise können eine mittlere Dicke und eine mittlere Dichte der Abschirmung als Parameter gewählt und im diskreten Raum variiert werden. Die Abweichung kann insbesondere nach der Chi-Quadrat-Methode minimiert werden.

Als Prüfgröße für den Chi-Quadrat-Test der Hypothese, dass eine abschirmende Struktur mit einer mittleren Dicke $d_a$ und einer mittleren Dichte $\rho_a$ vorhanden ist und die restliche Matrix der Probe die Dichte $\rho_q$ hat, eignet sich beispielsweise

$$\chi^2 = \sum_{i,j} \frac{\left( \frac{P(E_\gamma, i)}{P(E_\gamma, j)} - q_{i,j}(d_a, \rho_a, \rho_q) \right)^2}{q_{i,j}(d_a, \rho_a, \rho_q)} \quad \text{für } i \neq j$$

mit

$$q_{i,j} = \frac{\sigma(E_\gamma, i) \cdot \varepsilon_0(E_\gamma, i) \cdot (\mu/\rho)_{(q,j)}}{\sigma(E_\gamma, j) \cdot \varepsilon_0(E_\gamma, j) \cdot (\mu/\rho)_{(q,i)}} \cdot \frac{1 - \exp\left( \left( -\frac{\mu}{\rho} \right)_{(q,j)} \cdot \rho_q \cdot (R - d_s - d_a) \right)}{1 - \exp\left( \left( -\frac{\mu}{\rho} \right)_{(q,i)} \cdot \rho_q \cdot (R - d_s - d_a) \right)} \cdot$$

$$\cdot \frac{\exp\left( \left( \frac{\mu}{\rho} \right)_{(a,i)} \cdot \rho_a \cdot d_a \right)}{\exp\left( \left( \frac{\mu}{\rho} \right)_{(a,j)} \cdot \rho_a \cdot d_a \right)} \cdot \frac{\exp\left( \left( \frac{\mu}{\rho} \right)_{(s,i)} \cdot \rho_s \cdot d_s \right)}{\exp\left( \left( \frac{\mu}{\rho} \right)_{(s,j)} \cdot \rho_s \cdot d_s \right)}$$

$(\mu/\rho)_a$ und $(\mu/\rho)_q$ sind die Massenabschwächungskoeffizienten der abschirmenden Struktur bzw. der restlichen in der Probe enthaltenen Materialien. Die Probe besteht also insgesamt aus zwei Hauptfraktionen, nämlich dem Kalibrationsbereich (Stahlfass), dem eine Dichte $\rho_s$ und eine Dicke $d_s$ zugeordnet sind, und der darin eingeschlossenen Matrix (beispielsweise Betonfüllung mit Einschlüssen des gesuchten Elements) mit einer Dichte $\rho_m$. Die Bestandteile dieser Matrix können nun näher aufgeschlüsselt werden in abschirmende Strukturen, die über ihre mittlere Dichte $\rho_a$ und ihre mittlere Dicke $d_a$ beschrieben sind, sowie einen Rest mit der mittleren Dichte $\rho_q$.

Vorteilhaft wird somit das erwartete Verhältnis der Photopeakflächen, die von verschiedenen Gamma-Linien des in der Probe gesuchten Elements erzeugt werden, im parametrisierten Ansatz berücksichtigt.

Erkenntnisse aus einer zuvor durchgeführten qualitativen Elementanalyse der Probe können zur Festlegung oder Eingrenzung der Parameter herangezogen werden. Wurde beispielsweise erkannt, dass die Probe Elemente hoher Dichte (wie etwa Blei oder Cadmium) enthält, dann ist diese Dichte dieser Elemente ein möglicher Startwert für die mittlere Dichte $\rho_a$ der Abschirmung.

Unter der vereinfachenden Annahme, dass sich die abschirmende Struktur entlang der gesamten Höhe der Probe (beispielsweise abfallgefülltes Stahlfass) erstreckt, lässt sich die Dichte $\rho_q$ der nicht zur abschirmenden Struktur gehörenden restlichen Materialien durch die bekannte mittlere Dichte $\rho_m$ der gesamten Matrix der Probe (beispielsweise Füllmaterial Beton zuzüglich abschirmender Strukturen und Einschlüsse des gesuchten Elements) und durch die aus der Parameteroptimierung erhaltene mittlere Dichte $\rho_a$ der abschirmenden Struktur ausdrücken:

$$\rho_q = \rho_a + \frac{(R - d_s)^2}{(R - d_s - d_a)^2} \cdot (\rho_m - \rho_a) .$$

Dies folgt aus der Randbedingung, dass die mittlere Gesamtdichte der Probe multipliziert mit dem Gesamtvolumen der Probe die bekannte Gesamtmasse der Probe ergeben muss.

Sind durch Parameteroptimierung die mittlere Dicke $d_a$ und die mittlere Dichte $\rho_a$ einer abschirmenden Struktur in der Probe bekannt und hat die restliche Matrix dieser Probe die Dichte $\rho_q$, so gibt es für die Masse m des homogen in dieser restlichen Matrix verteilten Elements einen geschlossenen Ausdruck:

$$m = \frac{M}{N \cdot \sigma(E_\gamma) \cdot \Phi} \cdot \frac{P(E_\gamma)}{\varepsilon_0(E_\gamma) \cdot f_i \cdot F_0} \cdot \frac{(\mu/\rho)_q \cdot \rho_q \cdot V_q}{1 - \exp\left(\left(-\frac{\mu}{\rho}\right)_q \rho_q \cdot (R - d_s - d_a)\right)} \cdot$$

$$\cdot \exp\left(\left(\frac{\mu}{\rho}\right)_s \cdot \rho_s \cdot d_s\right) \cdot \exp\left(\left(\frac{\mu}{\rho}\right)_a \cdot \rho_a \cdot d_a\right) .$$

Hierin ist $V_q$ das Volumen der Probe, das weder durch die als Kalibrationsbereich dienende Umhüllung (Stahlfass) noch durch die abschirmende Struktur in Anspruch genommen wird:

$$V_q = \frac{(R - d_s - d_a)^2}{(R - d_s)^2} \cdot V$$

In einer weiteren besonders vorteilhaften Ausgestaltung der Erfindung wird die Probe gedreht. Die Abhängigkeit der von der Probe ausgesendeten Gammastrahlung, insbesondere ihrer Intensität, vom Drehwinkel wird auf der Basis einer Annahme für die Position eines in der Probe lokal konzentrierten Elements berechnet. Der Vergleich dieser Winkelabhängigkeit mit der aus Messergebnissen erhaltenen Winkelabhängigkeit wird als Maß für die Gültigkeit der Annahme ausgewertet.

Die Gültigkeit der Annahme kann dabei insbesondere über einen Chi-Quadrat-Test der Abweichung zwischen der berechneten und der aus Messergebnissen erhaltenen Winkelabhängigkeit ausgewertet werden.

Die Winkelabhängigkeit kann dabei beispielsweise als Auftragung der Zählrate über dem Drehwinkel vorliegen, die insbesondere auf das Maximum dieser Kurve normiert sein kann.

Die Probe kann beispielsweise zylindrisch sein (abfallgefülltes Stahlfass). Für eine solche Probe kann die winkelabhängige Zählrateverteilung $R(E_\gamma, \theta)$ unter den Annahmen simuliert werden, dass

- auf halber Höhe der Probe, also in einer Ebene mit der Neutronenquelle und dem Detektor, in verschiedenen Positionen $(\rho_i, \beta_i)$ jeweils ein Gramm des gesuchten Elements lokal konzentriert ist, wobei $\rho_i$ die Radial- und $\beta_i$ die Azimutalkomponente der Position i ist;
- die Probe neben dem gesuchten Element abschirmende Strukturen mit einer mittleren Dicke $d_a$ und einer mittleren Dichte $\rho_a$ enthält; und
- die restliche Matrix der Probe die mittlere Dichte $\rho_q$ hat.

In Abhängigkeit dieser Parameter ausgedrückt ist $R(E_\gamma,\theta)$ dann

$$R(E_\gamma,\theta) = \frac{1}{M} \cdot N \cdot \sigma(E_\gamma) \cdot \Phi \cdot \varepsilon_0(E_\gamma) \cdot \exp\left(-\left(\frac{\mu}{\rho}\right)_s \cdot \rho_s \cdot d_s\right) \cdot$$

$$\sum_{(p_i,\beta_i)} \left(\frac{d_0}{d_i(\theta)}\right)^2 \cdot \exp\left(-\left(\frac{\mu}{\rho}\right)_q \cdot \rho_q \cdot d_q(\theta)\right) \cdot \exp\left(-\left(\frac{\mu}{\rho}\right)_a \cdot \rho_a \cdot d_a(\theta)\right) \cdot \omega_i(\theta)$$

.

Hierin ist $d_i(\theta)$ der Abstand zwischen dem Detektor (etwa HPGe-Detektor) und dem lokal konzentrierten Vorkommen des gesuchten Elements an der Position i. Diese simulierte Zählrateverteilung $R(E_\gamma,\theta)$ kann mit der aus den Messergebnissen für die Netto-Photopeakflächen erhaltenen Zählrateverteilung

$$Z(E_\gamma,\theta) = P(E_\gamma,\theta) / f_i$$

verglichen werden.

Vorteilhaft wird die Abhängigkeit der von der Probe ausgesendeten Gammastrahlung, insbesondere ihrer Intensität, vom Drehwinkel auf der Basis eines parametrisierten Ansatzes für die Position des lokal konzentrierten Elements in der Probe berechnet, und die Abweichung zur aus Messergebnissen erhaltenen Winkelabhängigkeit wird durch Variation der Parameter minimiert. Die Abweichung kann insbesondere nach der Chi-Quadrat-Methode minimiert werden.

Beispielsweise können die obigen Ausdrücke für die simulierte winkelabhängige Zählrate $R(E_\gamma,\theta)$ und für die aus Messergebnissen erhaltene winkelabhängige Zählrate $Z(E_\gamma,\theta)$ zu einer Chi-Quadrat-Prüfgröße

$$\chi^2 = \sum_\theta^n \left(\frac{R(E_\gamma,\theta)}{R(E_\gamma,\theta)_{max}} - \frac{Z(E_\gamma,\theta)}{Z(E_\gamma,\theta)_{max}}\right)^2$$

kombiniert werden, worin $n=360/\Delta\theta$ die Feinheit der Winkeleinteilung angibt. $R(E_\gamma,\theta)_{max}$ und $Z(E_\gamma,\theta)_{max}$ sind jeweils das Maximum der simulierten bzw. aus Messergebnissen erhaltenen Zählrate, auf das die Zählraten für den Vergleich normiert werden. $\chi^2$ hängt nur von den Parametern $p_i$, $\beta_i$, $\rho_q$, $\rho_a$ und $d_a$ als Unbekannten ab. Diejenigen Werte der Parameter, für die $\chi^2$ sein Minimum annimmt, sind mit der dem gewählten Signifikanzniveau zugeordneten Wahrscheinlichkeit die tatsächlich in der Probe vorliegenden Werte.

In einer weiteren besonders vorteilhaften Ausgestaltung der Erfindung wird der Durchmesser einer Kugel aus dem Element berechnet, die, wäre sie am Ort der lokalen Konzentration des Elements in der Probe untergebracht, die gemessene Abhängigkeit der ausgesendeten Gammastrahlung vom Drehwinkel zeigen würde. Anschließend wird aus dem Vergleich dieses Durchmessers mit dem Durchmesser einer Referenzkugel aus dem Element, deren Masse bekannt ist, die Gesamtmasse m des lokal in der Probe konzentrierten Elements ausgewertet.

Auf diese Weise kann bei der Quantifizierung der Masse m berücksichtigt werden, dass eine lokale Konzentration des Elements eine endliche räumliche Ausdehnung hat. Wird im Inneren dieser lokalen Konzentration infolge der Bestrahlung mit Neutronen Gammastrahlung ausgesendet, so wird ein Teil dieser Gammastrahlung durch das Element selbst wieder absorbiert und erreicht den Detektor nicht. Wird diese Selbstabsorption nicht berücksichtigt, ist die Quantifizierung der Masse m mit einem systematischen Fehler behaftet. Dieser systematische Fehler ist umso größer, je ausgedehnter die lokale Konzentration des Elements in der Probe ist und je besser das Element Gammastrahlung absorbiert. Er ist insbesondere dann ausgeprägt, wenn es sich bei dem gesuchten Element um Schwermetalle wie Blei oder Cadmium handelt.

Erfindungsgemäß wird nun diejenige sphärische Geometrie aus dem gesuchten Element berechnet, deren Gamma-Abstrahlung die gleiche Winkelabhängigkeit zeigt wie das tatsächliche lokal konzentrierte Vorkommen des gesuchten Elements in der Probe. Für sphärische Geometrien lässt sich die Selbstabsorption besonders einfach berechnen, so dass sie bei der Quantifizierung der Masse m herauskorrigiert werden kann.

Der Durchmesser D der äquivalenten Kugel ergibt sich aus

$$\frac{\sum\limits_{\theta}^{n} Z(E_{\gamma},\theta)}{\sum\limits_{\theta}^{n} R(E_{\gamma},\theta)^{p_i,\beta_i,p_q,p_a,d_a}_{\chi^2_{min}}} = \rho \frac{4}{3} \cdot \pi \cdot \left(\frac{D}{2}\right)^3 \cdot F(E_{\gamma},D)$$

Hierin ist für R(E$_\gamma$,θ) diejenige winkelabhängige Zählratenverteilung angesetzt, für die im Vergleich mit der aus Messergebnissen erhaltenen Zählratenverteilung die Prüfgröße χ² ihr Minimum annimmt. ρ ist die Dichte des gesuchten Elements und ist bekannt. F(E$_\gamma$,D) ist der Selbstabsorptionsfaktor einer Kugel mit Durchmesser D aus dem gesuchten Element bei der Gamma-Energie E$_\gamma$. Dieser Faktor ist gegeben durch

$$F(E_{\gamma},D) = \frac{3\left[1 - \frac{2}{\left(\mu(E_{\gamma})\cdot D\right)^2} + \exp\left(-\mu(E_{\gamma})\cdot D\right)\cdot\left(\frac{2}{\mu(E_{\gamma})\cdot D} + \frac{2}{\left(\mu(E_{\gamma})\cdot D\right)^2}\right)\right]}{2\mu(E_{\gamma})\cdot D}$$

μ(E$_\gamma$) ist für das in der Probe gesuchte Element aus Tabellen bekannt. Damit lässt sich F(E$_\gamma$,D) als Funktion von D mit einem parametrisierten Ansatz ausdrücken:

$$F(E_{\gamma},D) = \frac{1 + a(E_{\gamma})\cdot D}{1 + b(E_{\gamma})\cdot D + c(E_{\gamma})\cdot D^2}$$ .

Werden beide Ausdrücke für F(E$_\gamma$,D) als Funktion von D berechnet, so liefert der Vergleich (Fit) die nur von der Gamma-Energie abhängigen Konstanten a(E$_\gamma$), b(E$_\gamma$) und c(E$_\gamma$), in denen unter anderem μ(E$_\gamma$) enthalten ist. Der parametrisierte Ansatz ist für die numerische Bestimmung des gesuchten Kugeldurchmessers D deutlich besser handhabbar, dafür jedoch mit dem geringfügigen Fehler des Fits behaftet.

Vorteilhaft wird als Referenzkugel diejenige Kugel gewählt, die, wäre sie am Ort der lokalen Konzentration des Elements in der Probe untergebracht, die gleiche Abhängigkeit der gemessenen Gammastrahlung vom Drehwinkel zeigen würde wie ein ebendort befindlicher Zylinder aus dem Element mit vorgegebener Geometrie.

Prinzipiell wäre es hierzu nötig, so lange Referenzkugeln für verschiedene Zylinder zu berechnen, bis sich eine Referenzkugel mit einem Durchmesser ergibt, der dem aus den gemessenen Daten bestimmten Durchmesser D der äquivalenten Kugel entspricht. Dies würde eine längere Rechenzeit benötigen, die für Reihenmessungen hinderlich wäre. Das Problem lässt sich jedoch dadurch vereinfachen, dass durch die Abmessungen der Probe und die vorgegebene Positionierung des Zylinders an den Polarkoordinaten (p$_i$,β$_i$) in der zylindrischen Probe (abfallgefülltes Fass) Maximalwerte für die Länge und für den Durchmesser eines hypothetischen Zylinders aus dem gesuchten Element vorgegeben sind.

Sinnvollerweise wird nun für alle möglichen Zylinderabmessungen jeweils der Durchmesser der entsprechenden Referenzkugel berechnet unter der zusätzlichen Randbedingung, dass alle Zylinder das gleiche Volumen und somit auch die gleiche vorgegebene Masse (Einheitsmasse) m$_{ref}$ haben sollen. In der Menge dieser Zylinder gibt es nun eine Referenzkugel mit einem kleinsten Durchmesser D$_{min}$ und eine Referenzkugel mit einem größten Durchmesser D$_{max}$. Liegt der aus den gemessenen Daten erhaltene Durchmesser D der äquivalenten Kugel zwischen D$_{min}$ und D$_{max}$, bedeutet dies, dass in der Probe genau die Einheitsmasse m=m$_{ref}$ an dem gesuchten Element lokal konzentriert ist. Liegt D außerhalb dieses Bereichs, ergibt sich die gesuchte Masse m des in der Probe lokal konzentrierten Elements aus der Gleichung

$$m = m_{ref} \cdot \frac{\sum\limits_{\theta}^{n} Z(E_{\gamma},\theta)}{Z_{ref}(E_{\gamma})} \cdot \left(\frac{F(E_{\gamma},\overline{D_{ref}})}{F(E_{\gamma},D)}\right)^{\frac{1}{2}}$$ .

Hierin sind die Zählrate $\overline{Z_{ref}(E_{\gamma})}$ und der Durchmesser $\overline{D_{ref}}$ der zum Zylinder äquivalenten Kugel jeweils über alle getesteten Zylinder gemittelt.

Die Unsicherheit $\sigma_m$ bei der Bestimmung der Masse m des Elements wird mit folgender Gleichung ermittelt

$$\sigma_m = \sqrt{(\sigma(\overline{Z_{ref}(E_\gamma)}))^2 + (\sigma(\chi^2_{\min}))^2}$$

Hierin sind $\sigma(\overline{Z_{ref}(E_\gamma)})$ die Standardabweichung von $\overline{Z_{ref}(E_\gamma)}$ und $\sigma(\chi^2_{\min})$ die Standardabweichung des Chi-Quadrat-Fit für den minimalen Wert der Prüfgröße $\chi^2$. $\sigma(\overline{Z_{ref}(E_\gamma)})$ beinhaltet die Unsicherheit für die unbekannte axiale Position des Elements, also die Unsicherheit, in welcher Höhe im Fass das gesuchte Element eingeschlossen ist.

In einer besonders vorteilhaften Ausgestaltung der Erfindung wird die Gammastrahlung in dem Zeitintervall nach einem Neutronenpuls gemessen, in dem mindestens 50 %, bevorzugt mindestens 75 % und ganz besonders bevorzugt mindestens 90 %, der Neutronen des Pulses auf Energien zwischen 100 eV und 1 KeV moderiert sind.

Es wurde erkannt, dass die durch den Neutronenpuls angeregte, von der Probe ausgesendete Gammastrahlung sich aus Komponenten zusammensetzt, die von unterschiedlichen physikalischen Wechselwirkungsmechanismen herrühren. Diese Komponenten werden nicht alle gleichzeitig ausgesendet, sondern nacheinander in einer zeitlichen Abfolge.

Zuerst sind alle auf die Probe eintreffenden Neutronen schnell. Ein Teil dieser schnellen Neutronen regt Atomkerne in der Probe zur prompten Aussendung von Gammastrahlung an. Ein weiterer Teil der Neutronen wandelt Atomkerne in der Probe in Radionuklide mit verschiedenen Halbwertszeiten um, die erst wesentlich später bedingt durch ihren radioaktiven Zerfall Gammastrahlung aussenden werden. Ein weiterer Teil der Neutronen wird durch Wechselwirkung mit leichten Elementen in der Probe oder auch mit der Wandung des Probenraums in den beanspruchten Energiebereich moderiert.

Die moderierten Neutronen regen nun ihrerseits weitere Atomkerne in der Probe zur prompten Aussendung von Gammastrahlung an, indem sie von diesen Atomkernen eingefangen werden, und/oder sie wandeln weitere Atomkerne in Radionuklide um. Diese Reaktionen sind gegenüber den direkt durch die schnellen Neutronen ausgelösten Reaktionen um die Zeitspanne verzögert, die die Moderation in den beanspruchten Bereich gedauert hat. Somit bewirkt die von den langsamen Neutronen herrührende prompte Gammastrahlung erst dann einen signifikanten Beitrag zur insgesamt vom Detektor registrierten Gammastrahlung, wenn der von den schnellen Neutronen herrührende Beitrag bereits wieder abgeklungen ist.

Die durch die Neutronenbestrahlung in der Probe gebildeten Radionuklide beginnen erst wesentlich später damit, ihrerseits Gammastrahlung auszusenden. Diese ist außerdem so schwach, dass sie hinter die von den moderierten Neutronen herrührende prompte Gammastrahlung vollständig zurücktritt.

Somit gibt es nach einem Neutronenpuls ein Zeitfenster, in dem praktisch die gesamte vom Detektor registrierte Gammastrahlung prompte Gammastrahlung ist, die von den in den beanspruchten Bereich moderierten Neutronen herrührt. Wird in diesem Zeitfenster gemessen, liegt somit der Zeitfaktor $f_t$ in der Formel für die Netto-Photopeakfläche $P(E_\gamma)$ von vornherein fest und verursacht keine nennenswerte Ungenauigkeit mehr bei der Quantifizierung des gesuchten Elements in der Probe.

Das Zeitfenster hat typischerweise eine Breite von einigen Millisekunden. Es öffnet sich typischerweise um 200 $\mu$s nach dem Ende des Neutronenpulses. Dann ist auch eine Aktivierung der beispielsweise aus Graphit bestehenden Wandung des Probenraums, die durch die schnellen Neutronen bewirkt wurde, in der Regel abgeklungen. Es schließt sich, indem die zunächst in den beanspruchten Energiebereich moderierten Neutronen weiter in geringere Energiebereiche moderiert werden, so dass von den Neutronen des Pulses weniger als 50 % (bevorzugt 75 %, ganz besonders bevorzugt 90 %) im beanspruchten Energiebereich verbleiben.

In einer besonders vorteilhaften Ausgestaltung der Erfindung wird zusätzlich die Gammastrahlung in dem Zeitintervall nach einem Neutronenpuls gemessen, in dem mindestens 50 %, bevorzugt mindestens 75 % und ganz besonders bevorzugt mindestens 90 %, der Neutronen des Pulses auf Energien unterhalb 1 eV moderiert sind. Zu diesem Zeitpunkt stehen kaum noch Neutronen zur Verfügung, deren Energie noch ausreicht, um die Aussendung prompter Gammastrahlung anzuregen. Die vom Detektor registrierte Gammastrahlung stammt dann praktisch nur noch von den längerlebigen Radionukliden, die durch die Neutronenbestrahlung gebildet wurden.

Diese verzögerte Gammastrahlung kann somit durch Abwarten, bis die prompte Gammastrahlung abgeklungen ist, physikalisch getrennt von der prompten Gammastrahlung erfasst werden. Damit kann sie mit ihrem eigenen Zeitfaktor $f_t$, der sich vom Zeitfaktor $f_t$ für die prompte Gammastrahlung unterscheidet, zur Quantifizierung des gesuchten Elements aus der Netto-Photopeakfläche herangezogen werden. Werden prompte und verzögerte Gammastrahlung hingegen gemeinsam erfasst und im Nachhinein durch eine Entfaltungsmethode wieder voneinander separiert, wird hierfür zusätzliche Rechenzeit benötigt, was für eine Reihenuntersuchung vieler Proben hinderlich ist. Zudem verstärkt eine Entfaltungsmethode als Nebenwirkung jedes Rauschen, mit dem die Rohdaten behaftet sind, zu einem signifikanten Fehler in den Endergebnissen für die prompte und verzögerte Gammastrahlung. Indem beide Strahlungen durch zeitlich getrennte Detektion von vornherein separat erfasst werden, werden diese Nachteile vermieden.

Für welche Dauer die verzögerte Gammastrahlung gemessen wird, richtet sich danach, welche durch den Neutronenbeschuss gebildeten Radionuklide detektiert werden sollen. Verschiedene Radionuklide können über ihre Halbwertszeiten voneinander unterschieden werden. Beispielsweise kann die verzögerte Gammastrahlung kurzlebiger Radionuklide zwischen zwei Neutronenpulsen über eine Dauer von einigen Millisekunden gemessen werden. Nach dem Ende der Bestrahlung kann die verzögerte Gammastrahlung längerlebiger Radionuklide über einen Zeitraum von einigen Minuten bis Stunden gemessen werden.

Der beanspruchte Energiebereich der Neutronen von 100 eV bis 1 KeV ist besonders vorteilhaft, wenn die Probe Materialien wie Cadmium, Bor oder Quecksilber enthält, die thermische Neutronen sehr stark absorbieren. In diesem Bereich ist ein hinreichender Wirkungsquerschnitt für den Einfang der Neutronen, der zur Aussendung prompter Gammastrahlung führt, gegeben. Zugleich durchdringen die Neutronen aber auch metallische Einschlüsse, so dass diese nicht zu Abschattungseffekten führen.

Die Unterscheidung zwischen prompter und verzögerter Gammastrahlung ist besonders wichtig, wenn die Probe ein Gemisch vieler Elemente enthält. Enthält die Probe beispielsweise sowohl Arsen als auch Cadmium, so hat die intensitätsstärkste Hauptlinie der prompten Gammastrahlung des Cadmiums die gleiche Energie wie intensitätsstärkste Hauptlinie der verzögerten Gammastrahlung des Arsens. Die separate Erfassung der prompten und verzögerten Gammastrahlung ermöglicht eine sichere Unterscheidung zwischen beiden Elementen.

Analog ist es auch möglich, die prompte Gammastrahlung, die von schnellen Neutronen herrührt, separat zu erfassen. Dazu ist die Gammastrahlung bis zu dem Zeitpunkt, in dem mindestens 50 % der Neutronen des Pulses auf Energien zwischen 100 eV und 1 KeV moderiert sind, zu messen. Diese Messung ist technisch jedoch anspruchsvoll, da die von den schnellen Neutronen angeregte prompte Gammastrahlung um mehrere Größenordnungen stärker ist als die von den moderierten Neutronen angeregte prompte Gammastrahlung und jeder Detektor nur einen begrenzten Dynamikbereich zwischen Ansprechschwelle und Sättigung hat.

Die Gammastrahlung kann insbesondere spektroskopisch, d. h. nach Energien der einzelnen Ereignisse sortiert, gemessen werden. Die Zählraten des Detektors bei den untersuchten Energien werden dann vorteilhaft über eine gewisse Anzahl Neutronenpulse aufkumuliert, damit sie statistisch aussagefähiger werden.

Vorteilhaft wird die Probe mit Neutronen mit einer Energie oberhalb von 10 MeV bestrahlt. Beispielsweise liefert ein elektronischer D-T-Neutronengenerator eine Neutronenenergie von 14 MeV. Neutronen in diesem Energiebereich können besonders tief in großvolumige Proben eindringen, um dort moderiert zu werden.

In einer besonders vorteilhaften Ausgestaltung der Erfindung wird zumindest ein Teil derjenigen Neutronen, die die Probe durchdringen, in die Probe zurückreflektiert. Dann kann mit einer gegebenen Rate an Neutronen, die die Neutronenquelle pro Sekunde liefert, die Probe zu einer stärkeren Gammastrahlung angeregt werden. Dies ist insbesondere dann vorteilhaft, wenn die in der Probe zu bestimmenden Elemente nur einen geringen Wirkungsquerschnitt für Neutronen aufweisen.

Zugleich trägt die Reflexion dazu bei, dass das Innere der Probe insgesamt homogener mit langsamen Neutronen beaufschlagt wird. Dies gilt im Besonderen, wenn die Probe in einen Probenraum eingebracht wird, in dem die Neutronen vielfach reflektiert werden können. Im Zusammenhang mit dem Verfahren wurde auch eine Vorrichtung zur Durchführung des erfindungsgemäßen Verfahrens entwickelt, welche nicht Teil der Erfindung ist. Diese Vorrichtung umfasst einen Probenraum zur Aufnahme der zu untersuchenden Probe, eine gepulste Neutronenquelle zur Bestrahlung der Probe und einen Detektor für die von der Probe ausgesendete Gammastrahlung. Der Probenraum ist von einem Neutronen reflektierenden Material umgeben, welches von der Probe nicht absorbierte Neutronen in den Probenraum zurückzureflektieren vermag.

Es wurde erkannt, dass in einem Probenraum diejenigen Neutronen aus der Neutronenquelle, die nicht beim ersten Durchgang durch die Probe absorbiert werden, ein- oder mehrfach durch die Probe hindurch reflektiert und dabei zugleich schrittweise moderiert werden können.

Damit entsteht ein Zeitprogramm, nach dem die Neutronen moderiert werden. Entsprechend diesem Zeitprogramm können bei der Durchführung des erfindungsgemäßen Verfahrens das oder die Zeitintervalle, in denen die Gammastrahlung gemessen wird, festgelegt werden.

Hat das Material eine hinreichende Dicke, so ist die Moderation der Neutronen durch dieses Material gegenüber der Moderation in der Probe selbst der weitaus dominierende Effekt. Damit ist dann auch das Zeitprogramm für die Moderation der Neutronen im Wesentlichen nur durch die Eigenschaften des Probenraums bestimmt und nicht durch die Eigenschaften der Probe. Dies ist besonders vorteilhaft für Reihenuntersuchungen an einer Vielzahl von Proben. Bei einer Reihenuntersuchung ist es zeitraubend und daher nachteilig, für jede neue Probe vor der eigentlichen Messung Parameter justieren zu müssen. Ist nun die Beschaffenheit des Probenraums für die Moderation der Neutronen dominierend, so gibt es eine Standardeinstellung für die Zeitintervalle, bei der auf jeden Fall schon ein gutes Ergebnis erzielt wird. Um dieses Ergebnis noch besser zu machen, kann die Position der Zeitfenster auf der Zeitachse durch eine Feinoptimierung an den Einfluss der Probe auf die Moderation angepasst werden. Für diese Feinoptimierung liefert die Standardeinstellung einen sinnvollen Ausgangspunkt. In einer besonders vorteilhaften Ausgestaltung ist das Neutronen reflektierende Material Graphit. Beryllium wäre prinzipiell ebenfalls geeignet, jedoch ist es teuer, hochgiftig und wegen seiner prinzipiellen Eignung als Neutronenreflektor für Kernwaffen nicht in größeren Mengen frei erhältlich.

In einer weiteren vorteilhaften Ausgestaltung ist der Detektor derart relativ zum Probenraum angeordnet, dass die Probe vom Detektor aus gesehen höchstens einen Raumwinkel von 0,6 Steradian ausfüllt. Dann ist gewährleistet, dass von der Gammastrahlung von jedem Ort in der Probe ein hinreichender Anteil in den Akzeptanzwinkel des Detektors trifft und vom Detektor registriert werden kann. Der Detektor kann dann gleichzeitig Gammastrahlung aus allen Bereichen der Probe erfassen, so dass die Probe nicht scannend am Detektor vorbeibewegt werden muss. Eine solche Scanbewegung erschwert zum einen die Interpretation der Messergebnisse, da diese sich immer auf verschiedene, teilweise überlappende Raumgebiete der Probe beziehen und nachträglich zu einer Gesamtschau der Probe zusammengesetzt werden müssen. Zum anderen enthalten die Stellglieder für eine Scanbewegung (wie etwa eine Hubvorrichtung) in der Regel Metall, das durch die Neutronenbestrahlung aktiviert wird und zu einem zusätzlichen Untergrundsignal auf dem Detektor führt. Aus dem vorgegebenen Raumwinkel von maximal 0,6 Steradian und den geometrischen Abmessungen der Probe (beispielsweise 200-Liter-Abfallfass) folgt, in welchem Abstand zum Detektor die Probe anzuordnen ist. Zudem muss der Detektor auf den Bereich, der im Rahmen des Scannens gerade relevant ist, kollimiert sein. Dies wird in der Regel durch eine Abschirmung gegen die hochenergetische Gammastrahlung aus dem gerade nicht relevanten Bereich der Probe realisiert. Hierfür sind große Mengen an Abschirmmaterial erforderlich, die durch die Neutronenstrahlung aktiviert werden und fortan das Messsignal mit einem Untergrundsignal belasten. Besteht die Abschirmung etwa aus Blei, so ist es nur noch schwer möglich, Blei in der untersuchten Probe aufzuspüren.

In einer weiteren vorteilhaften Ausgestaltung umfasst der Detektor einen Primärdetektor für die von der Probe ausgesendete Gammastrahlung, einen Sekundärdetektor, der den Primärdetektor zumindest teilweise umgibt, und Mittel für eine Antikoinzidenzschaltung von Primärdetektor und Sekundärdetektor. Die Energie der von der Probe ausgesendeten Gammaquanten wird nicht immer vollständig im Primärdetektor deponiert: Wird ein Gammaquant dort nicht absorbiert, sondern lediglich Compton-gestreut. Je dünner der Primärdetektor ist, desto mehr Compton-gestreute Gammaquanten können den Primärdetektor wieder verlassen, so dass ein Teil ihrer Energie bei der Energiemessung unberücksichtigt bleibt. Der Sekundärdetektor wird nun dazu verwendet, gerade diese entwichenen Gammaquanten zu registrieren. Sprechen innerhalb einer Torzeit Primär- und Sekundärdetektor an, so wird bei der Antikoinzidenzmessung dann davon ausgegangen, dass beide Ereignisse auf die Compton-Streuung eines Gammaquants im Primärdetektor zurückgehen. Diese Ereignisse werden dann verworfen. Der Sekundärdetektor muss keine hohe Energieauflösung haben; er muss nur zuverlässig registrieren, ob überhaupt ein Gammaquant auftrifft. Er muss also ein gutes Absorptionsvermögen für hochenergetische Gammastrahlung haben. Damit keine falschen Koinzidenzereignisse registriert werden, muss der Sekundärdetektor gut gegen die von der Probe ausgesendete Gammastrahlung und auch gegen die Neutronen aus der Neutronenquelle abgeschirmt sein.

Der geringe Raumwinkel, den die Probe ausfüllt, bewirkt zugleich indirekt einen verminderten Fehler bei der Quantifizierung von Elementen in der Probe. Wird die von einem Element in der Probe insgesamt vorhandene Menge über die Fläche unter einem Photopeak berechnet, so geht die Verteilung des Elements über die Probe in die Photopeak-Effizienz ein. Durch

Drehung der Probe um eine Achse kann die radiale Verteilung in der Probe bestimmt werden, die axiale Verteilung entlang der Drehachse ist jedoch unbekannt und führt zu einer Restunsicherheit. Je geringer die Höhe der Probe entlang der Drehachse im Verhältnis zur Entfernung zum Detektor ist, desto geringer wird diese Restunsicherheit.

Vorteilhaft weist der Detektor eine Neutronenabschirmung aus $^6$Li auf. Diese ist für die von der Probe ausgesendete Gammastrahlung in den relevanten Energiebereichen hinreichend transparent und absorbiert zugleich langsame Neutronen, ohne hierdurch zur Aussendung von Gammastrahlung angeregt zu werden.

Vorteilhaft ist der Detektor so relativ zur Neutronenquelle angeordnet, dass er nur von Neutronen erreicht werden kann, die mehrfach reflektiert wurden. Diese Neutronen sind durch die mehrfache Reflexion zugleich auch auf niedrigere Energien moderiert, speziell wenn Graphit oder ein anderes Neutronen reflektierendes Material zum Einsatz kommt, das auch als Neutronenmoderator geeignet ist. Dann können sie in der Abschirmung abgefangen werden. Schnelle Neutronen würden die Abschirmung durchschlagen und im Detektor zu Strahlenschäden führen.

Vorteilhaft weist die Vorrichtung einen Drehteller für die Probe auf. Dieser kann insbesondere über ein nicht oder nur schwer durch Neutronenbeschuss aktivierbares Material, wie beispielsweise kohlefaserverstärkten Kunststoff, an die Probe angrenzen. Dadurch wird vorteilhaft ein zusätzliches Untergrundsignal vermieden.

Spezieller Beschreibungsteil

Nachfolgend wird der Gegenstand der Erfindung anhand von Figuren näher erläutert, ohne dass der Gegenstand der Erfindung dadurch beschränkt wird. Es ist gezeigt:

Figur 1:   Ausführungsbeispiel für die erfindungsgemäße Vorrichtung in Aufsicht (a) und in Schnittzeichnung entlang der Linie A-A in Figur 1a (b).

Figur 2:   Chi-Quadrat-Fit der normierten Zählrateverteilung für einen 500 cm$^3$ Pb-Zylinder (r = 3,26 cm/ h = 15 cm) bei einer radialen Position von 14 cm vom Fasszentrum.

Figur 3:   Chi-Quadrat-Fit der normierten Zählrateverteilung für einen 5000 cm$^3$ Pb-Zylinder (r = 7,98 cm/ h = 25 cm) bei einer radialen Position von 14 cm vom Fasszentrum.

Figur 4:   Chi-Quadrat-Fit der normierten Zählrateverteilung für zwei 500 cm$^3$ Pb-Zylinder (r = 3,26 cm / h = 15 cm) bei einer bei einer radialen Position von 14 cm vom Fasszentrum und einem Winkelabstand von 45° zwischen den Zylindern.

Figur 5:   Chi-Quadrat-Fit der normierten Zählrateverteilung für zwei 500 cm$^3$ Pb-Zylinders (r = 3,26 cm / h = 15 cm) bei einer bei einer radialen Position von 14 cm vom Fasszentrum und einem Winkelabstand von 180° zwischen den Zylindern.

Figur 6:   Chi-Quadrat-Fit der normierten Zählrateverteilung für zwei 5000 cm$^3$ Pb-Zylinder (r = 7,98 cm / h = 25 cm) bei einer bei einer radialen Position von 14 cm vom Fasszentrum und einem Winkelabstand von 180° zwischen den Zylindern.

Figur 7.   Chi-Quadrat-Fit der normierten Zählrateverteilung für zwei 1000 cm$^3$ Pb-Zylinder (r1 = 2 cm/ h1 = 80 cm; r2 = 14 cm/ h2 = 1,62 cm) bei einer radialen Position von 14 cm vom Fasszentrum und einem Winkelabstand von 90° zwischen den Zylindern.

Figur 8:   Chi-Quadrat-Fit der normierten Zählrateverteilung für einen 1000 cm$^3$ Pb-Zylinder (r = 2 cm/ h =80 cm) bei einer radialen Position von 14 cm vom Fasszentrum und einen 5000 cm$^3$ Pb-Zylinder (r = 7,98 cm/ h =25 cm) im Fasszentrum.

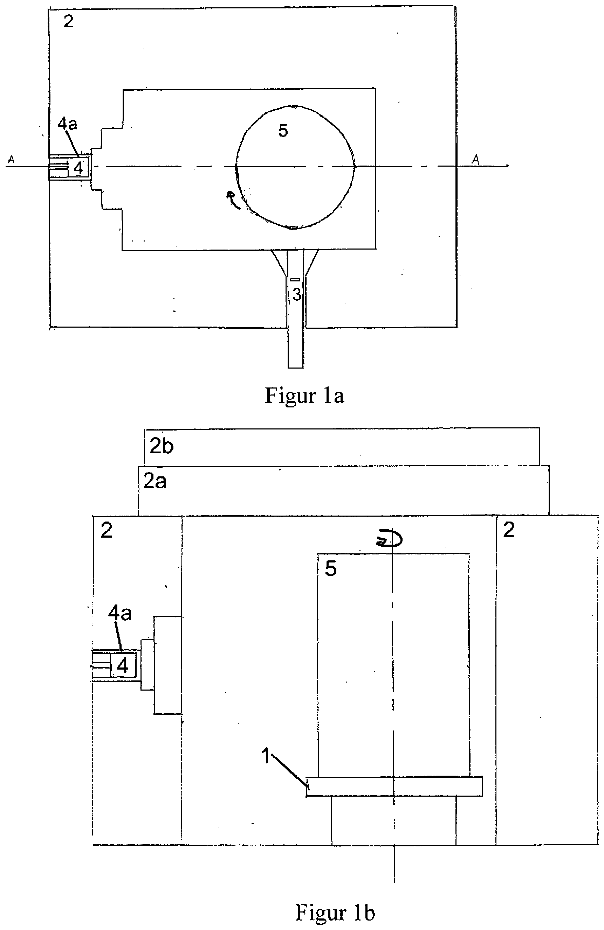

Figur 1 zeigt ein Ausführungsbeispiel für die erfindungsgemäße Vorrichtung. Teilbild a ist eine Darstellung in Aufsicht. Teilbild b ist eine Schnittzeichnung, wobei der Schnitt entlang der in Teilbild a eingezeichneten Linie A-A ausgeführt wurde. Ein Drehteller 1 für die Aufnahme der Probe 5 ist innerhalb einer Graphitkammer 2 mit einer Wandstärke von 40 cm angeordnet, die als Neutronenreflektor dient. Der Innenraum der Graphitkammer 2 ist 80 cm breit, 140 cm lang und 140 cm hoch. Die Graphitkammer hat einen Deckel, der aus einer Platte 2a aus kohlenstofffaserverstärktem Kunststoff mit darüber angeordnetem Graphit 2b besteht.

In der Graphitkammer 2 kann die Probe auf dem Drehteller 1 mit Neutronen aus dem D-T-Neutronengenerator 3 beaufschlagt werden. Der Abstand zwischen dem Zentrum der Probe 5 und dem Tritium-Target des D-T-Neutronengenerators 3 ist mit 55 cm so gewählt, dass die von dem Tritium-Target isotrop abgestrahlten Neutronen überall in der Probe 5 einen hinreichenden Fluss bewirken. Der Neutronengenerator 3 ist hierzu in einer Wand der Graphitkammer 2 auf halber Höhe der Probe 5 positioniert (offene Geometrie). Es besteht keine direkte Sichtverbindung zwischen dem Neutronengenerator 3 und dem HPGe-Detektor 4. Folglich kann der Detektor 4 nur von Neutronen erreicht werden, die mehrfach in der Graphitkammer 2 reflektiert und dabei moderiert wurden. Er wird somit nicht von schnellen Neutronen getroffen, die seine $^6$Li-Abschirmung 4a durchschlagen und zu Strahlenschäden führen würden. Der HPGe-Detektor 4 ist ebenfalls in einer Wand der Graphitkammer 2 um 90° versetzt zum Neutronengenerator 3 auf halber Höhe der Probe 5 positioniert (offene Geometrie). Der Abstand zwischen dem Zentrum der Probe 5 und dem HPGe-Detektor (mit einer relativen Effizienz von 100 %) 4 ist mit 100 cm so gewählt, dass von der Gammastrahlung, die von jedem Punkt in der Probe 5 aus isotrop abgestrahlt wird, ein hinreichender Anteil in den Akzeptanzwinkel des Detektors 4 fällt und zum Signal des Detektors beiträgt.

Der Neutronengenerator wird gepulst betrieben.

Im folgenden wird an Hand einiger Beispiele für Proben simuliert, welche experimentellen Daten bei der Durchführung des erfindungsgemäßen Verfahrens zu erwarten wären und welche Masse m des gesuchten Elements in der Probe das erfindungsgemäße Verfahren jeweils als Endergebnis liefern würde. Diese Masse m wird jeweils mit der Masse an dem Element verglichen, die gemäß der Simulationsannahme tatsächlich in der Probe enthalten ist.

In Tabelle 1 sind die winkelabhängigen Zählrateverteilungen für verschieden geformte Bleizylinder angegeben, die sich bei einer Messung ergeben würden ($Z(E_\gamma,\theta)$ in counts/Sekunde) bzw. die unter den oben genannten vereinfachenden Annahmen theoretisch vorhergesagt würden ($R(E_\gamma,\theta)$ in counts/Sekunde/Gramm Blei). Die Zählraten wurden für eine Gamma-Energie von 1064 keV (Nuklid Pb-207m) für Zylinder mit einem Volumen von jeweils 1000 cm$^3$ (p = 11,34 g/cm$^3$; $m_{ref}$ = 11,34 kg) berechnet, die sich in ihren Radien und Längen (r bzw. h, jeweils in cm angegeben) voneinander unterscheiden. Die Zylinder sind jeweils in einem mit einer Betonmatrix ausgefüllten 200-Liter-Standardfass bei einer radialen Position von 14 cm vom Fasszentrum eingebettet. Sie liegen in einer Ebene auf halber Höhe des Fasses und somit in einer Ebene mit der Neutronenquelle und dem Detektor. Die maximale Länge des Zylinders ist für ein Fass mit einer Höhe von 86 cm auf 80 cm festgelegt. Der maximale Durchmesser des Zylinders beträgt 28 cm und ist gleich der Radius des Fasses. Die Dichte von Beton ist 1,5 g/cm$^3$.

Die Zählrateverteilungen sind an die angenommene radiale Position, an der sich das gesuchte Element in der Probe befindet, gebunden. Ändert sich diese Annahme, sollte ein neuer derartiger Kalibrierungssatz berechnet werden.

Die am Ende der Auswertung erhaltene Gesamtmasse m des gesuchten Elements in der Probe weicht stärker von der wahren Gesamtmasse des Elements ab, wenn die Differenz zwischen der angenommenen und der wahren radialen Position des Elements in der Probe größer wird. Die radiale Position des Elements in der Probe lässt sich über eine Analyse der winkelabhängigen Zählrateverteilung bestimmen.

Tabelle 1

| $\theta$ | $Z(E_\gamma, \theta)$ c/s | | | | | | | $R(E_\gamma, \theta)$ c/s/g |
|---|---|---|---|---|---|---|---|---|
| | r=2/h=80 | r=2,30/h=60 | r=2,82/h-40 | r=4/h=20 | r=5,64/h=10 | r=8,92/h=4 | r=14/h=1,62 | |
| 0 | 2,055 | 1,9500 | 1,749 | 1,420 | 1,147 | 0,942 | 0,921 | $4,727 \cdot 10^{-4}$ |
| 45 | 0,869 | 0,8240 | 0,738 | 0,595 | 0,487 | 0,406 | 0,412 | $1,783 \cdot 10^{-4}$ |
| 90 | 0,2985 | 0,2830 | 0,254 | 0,206 | 0,171 | 0,1496 | 0,178 | $4,920 \cdot 10^{-5}$ |
| 135 | 0,1009 | 0.0959 | 0,0863 | 0,0702 | 0,0581 | 0,0502 | 0,0571 | $1,886 \cdot 10^{-5}$ |
| 180 | 0,0896 | 0,0854 | 0,0769 | 0,0622 | 0,0510 | 0,0426 | 0,0436 | $2,078 \cdot 10^{-5}$ |
| 225 | 0,3407 | 0,324 | 0,291 | 0,237 | 0,196 | 0,169 | 0,193 | $6,369 \cdot 10^{-5}$ |
| 270 | 1,615 | 1,531 | 1,375 | 1,116 | 0,926 | 0,809 | 0,963 | $2,662 \cdot 10^{-4}$ |
| 315 | 2,935 | 2,781 | 2,463 | 2,010 | 1,644 | 1,371 | 1,393 | $6,023 \cdot 10^{-4}$ |
| $\sum_{\theta}$ | 8,304 | 7,8743 | 7,0322 | 5,7164 | 4,6801 | 3,9394 | 4,1607 | $1,672 \cdot 10^{-3}$ |
| D (cm) | 20,63 | 20,11 | 19,01 | 17,14 | 15,99 | 14,25 | 14,64 | |

D ist der Durchmesser der Kugel, deren Abstrahlverhalten dem des jeweils betrachteten Zylinders äquivalent ist. Die Parameter für die Selbstabsorption von 1064 keV in Pb sind: $a(E_\gamma) = 0,1397$; $b(E_\gamma) = 0,4098$ und $c(E_\gamma) = 0,0737$.

Die mittlere Zählrate ist $\overline{Z_{ref}(E_\gamma)} = 5,958 \pm 1,795 \text{ c/s}$. Hieraus ergibt sich ein mittlerer Durchmesser der äquivalenten Kugel von $\overline{D_{ref}} = 17,49 \text{ cm}$.

Die Kugeldurchmesser liegen zwischen $D_{min} = 14,25$ cm und $D_{max} = 20,63$ cm.

Beispiel 1

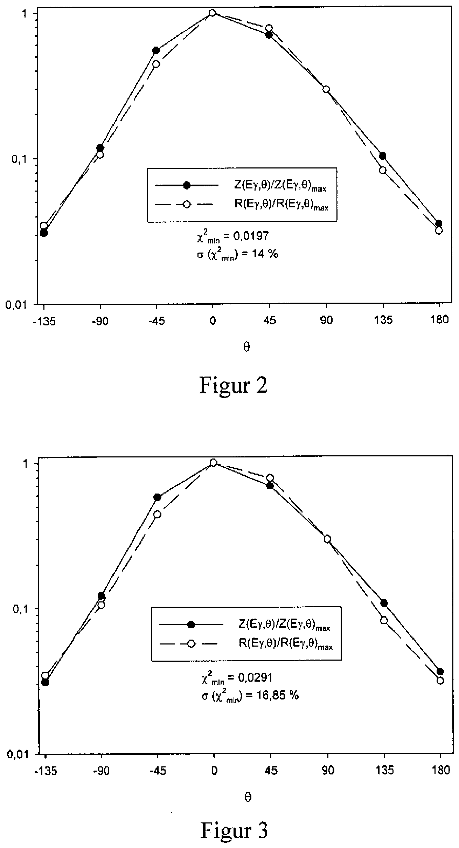

Bestimmung der Masse eines 500 cm³ Pb-Zylinders mit einem Radius von 3,26 cm und einer Länge von 15 cm. Der Zylinder liegt in einer Ebene auf halber Höhe des Fasses bei einer radialen Position von 14 cm vom Fasszentrum. Die Zählraten als Funktion des Rotationswinkels $\theta$ sind in Tabelle 2 zusammengefasst. $R(E_\gamma, \theta)$ ist für diejenigen Werte von Position $(p_i, \beta_i)$ in der Probe, Dichte $\rho_a$ und Dicke $d_a$ einer abschirmenden Struktur sowie Dichte $\rho_q$ des restlichen Probenmaterials angegeben, für die der Vergleich mit $Z(E_\gamma, \theta)$ über einen Chi-Quadrat-Test bei einer Standardabweichung $\sigma$ von 14 % einen minimalen Wert der Prüfgröße $\chi^2$ liefert. Der Vergleich der auf ihr jeweiliges Maximum $R(E_\gamma, \theta)_{max}$ bzw. $Z(E_\gamma, \theta)_{max}$ normierten Winkelabhängigkeiten von $R(E_\gamma, \theta)$ und $Z(E_\gamma, \theta)$ ist in Figur 2 dargestellt.

In diesem und in den weiteren Beispielen ist es zwecks Veranschaulichung des Verfahrens Teil der Simulationsannahme, dass die Probe nur Beton als Füllmaterial ohne zusätzliche abschirmende Strukturen enthält. Es ist also $\rho_a = 0$ und $d_a = 0$.

Tabelle 2

| Zählraten für einen 500 cm³ Pb-Zylinders (r = 3,26 cm/ h = 15 cm) bei einer radialen Position von 14 cm vom Fasszentrum. | | | | | | | | |
|---|---|---|---|---|---|---|---|---|
| $\theta$ | 0 | 45 | 90 | 135 | 180 | 225 | 270 | 315 | |
| $Z(E_\gamma, \theta)$ c/s | 0,810 | 0,342 | 0,118 | 0,0402 | 0,0357 | 0,1356 | 0,638 | 1,1548 | $\sum_{\theta}$ 3,275 |

(fortgesetzt)

| Zählraten für einen 500 cm³ Pb-Zylinders (r = 3,26 cm/ h = 15 cm) bei einer radialen Position von 14 cm vom Fasszentrum. | | | | | | | | |
|---|---|---|---|---|---|---|---|---|
| θ | 0 | 45 | 90 | 135 | 180 | 225 | 270 | 315 | |
| $R(E_\gamma, \theta)$ c/s/g | 4,727 $10^{-4}$ | 1,783 $10^{-4}$ | 4,920 $10^{-5}$ | 1,886 $10^{-5}$ | 2,078 $10^{-5}$ | 6,369 $10^{-5}$ | 2,662 $10^{-4}$ | 6,023 $10^{-4}$ | 1,672 $10^{-3}$ |

Der Durchmesser der Referenzkugel, deren Gamma-Abstrahlung die gleiche Winkelabhängigkeit aufweist wie $R(E_\gamma, \theta)$, ist D = 13,00 cm und liegt außerhalb des Intervalls [$D_{min}, D_{max}$]. m ergibt sich daher aus der Referenzmasse $m_{ref}$ durch die oben beschriebene Skalierung mit der Zählrate und der Selbstabsorption, jeweils bezogen auf die Durchschnittswerte aller in Tabelle 1 betrachteter Referenzkugeln. Damit wird die Masse des Zylinders zu 5,39 ± 1,79 kg bestimmt, was in guter Übereinstimmung mit dem gemäß Simulationsannahme "wahren" Wert von 5,67 kg ist.

Beispiel 2

Bestimmung der Masse eines 5000 cm³ Pb-Zylinders mit einem Radius von 7,98 cm und einer Länge von 25 cm. Der Zylinder liegt in einer Ebene auf halber Höhe des Fasses bei einer radialen Position von 14 cm vom Fasszentrum. Die Zählraten als Funktion des Rotationswinkels θ sind in Tabelle 3 zusammengefasst. Der Chi-Quadrat-Fit der normierten Zählrateverteilung ist in Figur 3 dargestellt. Ansonsten ist die Vorgehensweise mit Beispiel 1 identisch.

Tabelle 3

| Zählraten für einen 5000 cm³ Pb-Zylinder ( r = 7,98 cm/ h = 25 cm) bei einer radialen Position von 14 cm vom Fasszentrum. | | | | | | | | |
|---|---|---|---|---|---|---|---|---|
| θ | 0 | 45 | 90 | 135 | 180 | 225 | 270 | 315 | $\sum_\theta$ |
| $Z(E_\gamma, \theta)$ c/s | 4,846 | 2,078 | 0,753 | 0,253 | 0,218 | 0,856 | 4,076 | 7,018 | 20,098 |
| $R(E_\gamma, \theta)$ c/s/g | 4,727 $10^{-4}$ | 1,783 $10^{-4}$ | 4,920 $10^{-5}$ | 1,886 $10^{-5}$ | 2,078 $10^{-5}$ | 6,369 $10^{-5}$ | 2,662 $10^{-4}$ | 6,023 $10^{-4}$ | 1,672 $10^{-5}$ |

Der Durchmesser der Referenzkugel ist D = 32,19 cm und liegt außerhalb des Intervalls [$D_{min}, D_{max}$]. Durch Skalierung der Referenzmasse mit Zählraten und Selbstabsorption wird die Masse m des Zylinders zu 52 ± 18 kg bestimmt. Dies ist in guter Übereinstimmung mit dem gemäß Simulationsannahme "wahren" Wert von 56,7 kg.

Beispiel 3

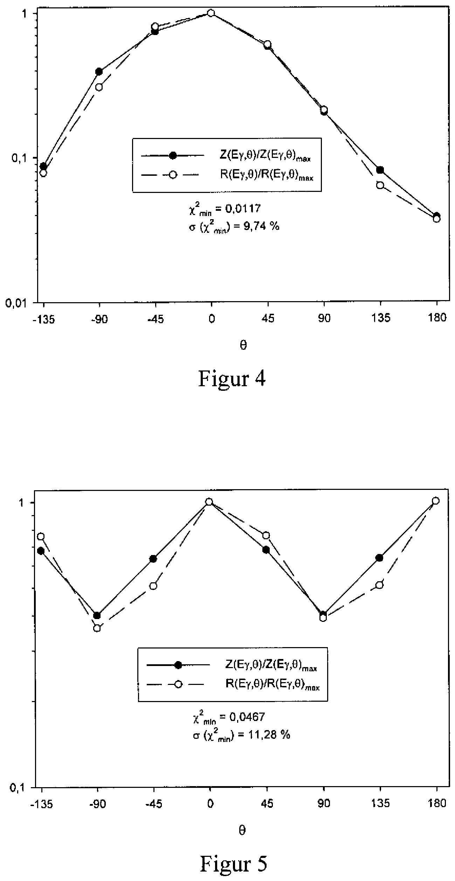

Bestimmung der Gesamtmasse von zwei 500 cm³ Pb-Zylindern mit einem Radius von 3,26 cm und einer Länge von 15 cm. Die Zylinder liegen in einer Ebene auf halber Höhe des Fasses bei einer radialen Position von 14 cm vom Fasszentrum. Die Winkelpositionen der beiden Zylinder liegen in dieser Ebene um 45° auseinander. Ansonsten ist die Vorgehensweise mit Beispiel 1 identisch. Die Zählraten als Funktion des Rotationswinkels θ sind in Tabelle 4 zusammengefasst. Der Chi-Quadrat-Fit der normierten Zählrateverteilung ist in Figur 4 dargestellt.

Tabelle 4

| Zählraten für zwei 500 cm³ Pb-Zylinder (r = 3,26 cm / h = 15 cm) bei einer radialen Position von 14 cm vom Fasszentrum und einem Winkelabstand von 45° zwischen den Zylindern. | | | | | | | | |
|---|---|---|---|---|---|---|---|---|
| θ | 0 | 45 | 90 | 135 | 180 | 225 | 270 | 315 | $\sum_\theta$ |
| $Z(E_\gamma, \theta)$ | 1,1522 | 0,401 | 0,1582 | 0,0759 | 0,1713 | 0,7736 | 1,4738 | 1,695 | 6,171 |
| $R(E_\gamma, \theta)$ c/s/g | 6,510 $10^{-4}$ | 2,275 $10^{-4}$ | 6,806 $10^{-5}$ | 3,964 $10^{-5}$ | 8,447 $10^{-5}$ | 3,2989 $10^{-5}$ | 8,6848 $10^{-4}$ | 1,075 $10^{-3}$ | 3,344 $10^{-3}$ |

Der Durchmesser der Referenzkugel ist d = 12,63 cm und liegt außerhalb des Intervalls [$D_{min}$, $D_{max}$], Die durch Skalierung der Referenzmasse mit Zählraten und Selbstabsorption berechnete Gesamtmasse der Zylinder ist 10,0 ± 3,2 kg und liegt in guter Übereinstimmung mit dem gemäß Simulationsannahme "wahren" Wert von 11,34 kg.

Beispiel 4

Bestimmung der Gesamtmasse von zwei 500 cm³ Pb-Zylinders mit einem Radius von 3,26 cm und einer Länge von 15 cm. Die Zylinder liegen in einer Ebene auf halber Höhe des Fasses bei einer radialen Position von 14 cm vom Fasszentrum. Sie liegen sich in dieser Ebene genau gegenüber (Winkelabstand 180°). Ansonsten ist die Vorgehensweise mit Beispiel 1 identisch. Die Zählraten als Funktion des Rotationswinkels θ sind in Tabelle 5 zusammengefasst. Der Chi-Quadrat-Fit der normierten Zählrateverteilung ist in Figur 5 dargestellt.

Tabelle 5

| Zählraten für zwei 500 cm³ Pb-Zylinders (r = 3,26 cm / h = 15 cm) bei einer radialen Position von 14 cm vom Fasszentrum und einem Winkelabstand von 180° zwischen den Zylindern. | | | | | | | | | |
|---|---|---|---|---|---|---|---|---|---|
| θ | 0 | 45 | 90 | 135 | 180 | 225 | 270 | 315 | |
| $Z(E_\gamma, \theta)$ c/s | 0,810 | 0,478 | 0,756 | 1,195 | 0,810 | 0,478 | 0,756 | 1,195 | $\sum_{\theta}^{\cdot}$ 6,478 |
| $R(E_\gamma, \theta)$ c/s/g | 4,727 $10^{-4}$ | 2,420 $10^{-4}$ | 3,154 $10^{-4}$ | 6,212 $10^{-4}$ | 4,727 $10^{-4}$ | 2,420 $10^{-4}$ | 3,154 $10^{-4}$ | 6,212 $10^{-4}$ | 3,306 $10^{-3}$ |

Der Durchmesser der Referenzkugel ist D = 13,01 cm und liegt außerhalb des Intervalls [$D_{min}$, $D_{max}$]. Die durch Skalierung der Referenzmasse mit Zählraten und Selbstabsorption berechnete Gesamtmasse der Zylinder ist 10,7 ± 3,4 kg und liegt in guter Übereinstimmung mit dem gemäß Simulationsannahme "wahren" Wert von 11,34 kg.

Beispiel 5

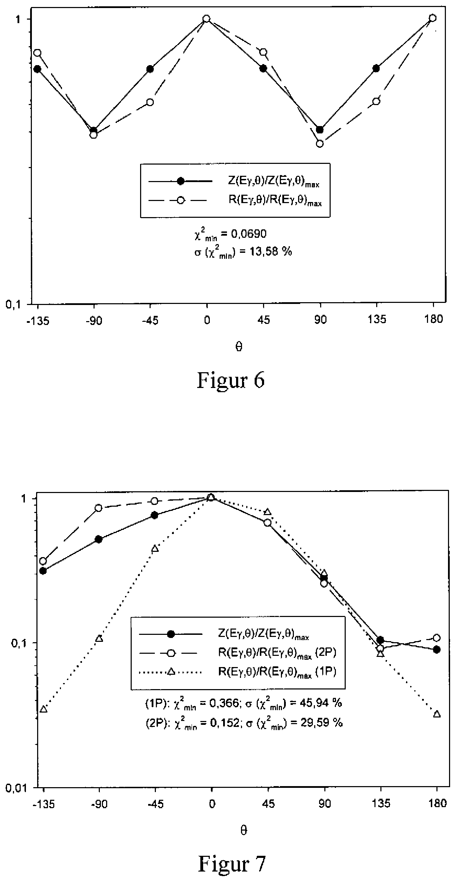

Bestimmung der Gesamtmasse von zwei 5000 cm³ Pb-Zylindern mit einem Radius von 7,97 cm und einer Länge von 25 cm. Die Zylinder liegen in einer Ebene auf halber Höhe des Fasses bei einer radialen Position von 14 cm vom Fasszentrum. Die Zylinder liegen sich in dieser Ebene genau gegenüber (Winkelabstand 180°). Ansonsten ist die Vorgehensweise mit Beispiel 1 identisch. Die Zählraten als Funktion des Rotationswinkels θ sind in Tabelle 6 zusammengefasst. Der Chi-Quadrat-Fit der normierten Zählrateverteilung ist in Figur 6 dargestellt.

Tabelle 6

| Zählraten für zwei 5000 cm³ Pb-Zylinder (r = 7,98 cm / h = 25 cm) bei einer radialen Position von 14 cm vom Fasszentrum und einem Winkelabstand von 180° zwischen den Zylindern. | | | | | | | | | |
|---|---|---|---|---|---|---|---|---|---|
| θ | 0 | 45 | 90 | 135 | 180 | 225 | 270 | 315 | |
| $Z(E_\gamma, \theta)$ c/s | 4,846 | 2,934 | 4,832 | 7,272 | 4,846 | 2,934 | 4,832 | 7,271 | $\sum_{\theta}^{n}$ 39,766 |
| $R(E_\gamma, \theta)$ c/s/g | 4,727 $10^{-4}$ | 2,420 $10^{-4}$ | 3,154 $10^{-4}$ | 6,212 $10^{-4}$ | 4,727 $10^{-4}$ | 2,420 $10^{-4}$ | 3,154 $10^{-4}$ | 6,212 $10^{-4}$ | 3,306 $10^{-3}$ |

Der Durchmesser der Referenzkugel ist D = 32,20 cm und liegt außerhalb des Grenzbereichs [$D_{min}$, $D_{max}$]. Die durch Skalierung der Referenzmasse mit Zählraten und Selbstabsorption berechnete Gesamtmasse der Zylinder ist 103 ± 34 kg und liegt in guter Übereinstimmung mit dem gemäß Simulationsannahme "wahren" Wert von 113,4 kg.

Beispiel 6

Bestimmung der Gesamtmasse eines 1000 cm³ Pb-Zylinders mit einem Radius von 2 cm und einer Länge von 80 cm und eines 1000 cm³ Pb-Zylinders mit einem Radius von 14 cm und einer Länge von 1,62 cm. Die Zylinder liegen in einer Ebene auf halber Höhe des Fasses bei einer radialen Position von 14 cm vom Fasszentrum. Der Winkelabstand zwischen den zwei Zylindern beträgt 90°, Ansonsten ist die Vorgehensweise mit Beispiel 1 identisch. Die Zählraten als Funktion des Rotationswinkels θ sind in Tabelle 7 zusammengefasst. Der Chi-Quadrat-Fit der normierten Zählrateverteilung unter Berücksichtigung von 1-Punkt-Aktivität (1P) und 2-Punkt-Aktivitäten (2P) ist in Figur 7 dargestellt.

1-Punkt-Aktivität bedeutet, dass nur eine der beiden in der Probe vorhandenen Quellen für die Simulation der ausgesendeten Gammastrahlung berücksichtigt wird. 2-Punkt-Aktivität bedeutet, dass beide Quellen berücksichtigt werden.

Tabelle 7

| Zählraten für zwei 1000 cm³ Pb-Zylinder (r1 = 2 cm/ h1 = 80 cm; r2 = 14 cm/h2 = 1,62 cm) bei einer radialen Position von 14 cm vom Fasszentrum und einem Winkelabstand von 90° zwischen den Zylindern. | | | | | | | | | |
|---|---|---|---|---|---|---|---|---|---|
| θ | 0 | 45 | 90 | 135 | 180 | 225 | 270 | 315 $\sum\limits_{\theta}$ | |
| $Z(E_\gamma,\theta)$ c/s | 2,233 | 0,926 | 0,342 | 0,294 | 1,053 | 1,734 | 2,536 | 3,347 | 12,465 |
| 1-Punktaktivität $R$ $(E_\gamma,\theta)$ c/s/g | 4,727 $10^{-4}$ | 1,783 $10^{-4}$ | 4,920 $10^{-5}$ | 1,886 $10^{-5}$ | 2,078 $10^{-5}$ | 6,369 $10^{-5}$ | 2,662 $10^{-4}$ | 6,023 $10^{-4}$ | 1,672 $10^{-3}$ |
| 2-Punktaktivitäten $R$ $(E_\gamma,\theta)$ c/s/g | 5,219 $10^{-4}$ | 1,972 $10^{-4}$ | 6,998 $10^{-5}$ | 8,255 $10^{-5}$ | 2,870 $10^{-5}$ | 6,660 $10^{-5}$ | 7,389 $10^{-4}$ | 7,806 $10^{-4}$ | 3,344 $10^{-3}$ |

Der aus der Analyse der normierten Zählrateverteilung mit 1-Punkt-Aktivität erhaltene Durchmesser der Referenzkugel ist D = 25,31 cm und liegt außerhalb des Intervalls [$D_{min}$,$D_{max}$]. Die durch Skalierung der Referenzmasse mit Zählraten und Selbstabsorption berechnete Gesamtmasse der Zylinder ist 28,5 ± 13,1 kg und liegt 25 % höher als der Sollwert, 22,7 kg. Hierin zeigt sich, dass die Näherung der Probe durch nur einen Einschluss, der Gammastrahlung emittiert, für die hier vorliegende zweigeteilte Probe zu ungenau ist und versagt.

Der aus der Analyse der normierten Zählrateverteilung mit 2-Punkt-Aktivitäten erhaltene Durchmesser der Referenzkugel ist D = 17,89 cm und liegt innerhalb des Intervalls [$D_{min}$,$D_{max}$]. Die Gesamtmasse der Zylinder ist zweimal die Referenzmasse: 22,7 ± 6,7 kg. Die Präzisierung des Modells für die Probe zahlt sich somit in Form einer genaueren Quantifizierung des gesuchten Elements aus.

Für Beispiel 7 wurde ein neuer Kalibrierungssatz erstellt, da die radiale Position des gesuchten Elements in der Probe gegenüber den bisherigen Beispielen verändert wurde. In Tabelle 8 sind analog zu Tabelle 1 die winkelabhängigen Zählraten bei 1064 keV (Nuklid Pb-207m) für 1000 cm³ (p = 11,34 g/cm³; m = 11,34 kg) Pb-Zylinder unterschiedlichen Radien und Länge (r, h) in einer Betonmatrix bei einer radialen Position von 8 cm vom Fasszentrum als Funktion des Rotationswinkels θ aufgetragen. Die Zylinder liegen in einer Ebene auf halber Höhe des Fasses. Die maximale Länge des Zylinders ist für ein Fass mit einer Höhe von 86 cm auf 80 cm festgelegt. Der maximale Durchmesser des Zylinders beträgt 28 cm und ist gleich dem Radius des Fasses. Die Dichte von Beton ist 1,5 g/cm³.

Tabelle 8

| θ | $Z(E_\gamma,\theta)$ c/s | | | | | | | $R(E_\gamma,\theta)$ c/s/g |
|---|---|---|---|---|---|---|---|---|
| | r=2/h=80 | r=2,30/h=60 | r=2,82/h=40 | r=4/h=20 | r=5,64/h=10 | r=8,92/h=4 | r=14/h=1,62 | |
| 0 | 1,033 | 0,982 | 0,882 | 0,711 | 0,581 | 0,478 | 0,472 | 2,172 $10^{-4}$ |
| 45 | 0,605 | 0,571 | 0,516 | 0,417 | 0,341 | 0,283 | 0,284 | 1,336 $10^{-4}$ |
| 90 | 0,304 | 0,289 | 0,260 | 0,210 | 0,172 | 0,144 | 0,150 | 6,308 $10^{-5}$ |
| 135 | 0,173 | 0,164 | 0,148 | 0,120 | 0,099 | 0,082 | 0,085 | 3,762 $10^{-5}$ |
| 180 | 0,173 | 0,165 | 0,148 | 0,120 | 0,098 | 0,082 | 0,083 | 4,005 $10^{-5}$ |
| 225 | 0,343 | 0,327 | 0,294 | 0,240 | 0,195 | 0,164 | 0,169 | 7,476 $10^{-5}$ |
| 270 | 0,799 | 0,758 | 0,683 | 0,552 | 0,452 | 0,380 | 0,396 | 1,655 $10^{-4}$ |
| 315 | 1,20 | 1,136 | 1,028 | 0,829 | 0,678 | 0,563 | 0,565 | 2,655 $10^{-4}$ |
| $\sum\limits_{\theta}$ | 4,630 | 4,392 | 3,959 | 3,198 | 2,616 | 2,176 | 2,204 | 9,983 $10^{-4}$ |
| D (cm) | 19,95 | 19,43 | 18,45 | 16,59 | 15,02 | 13,71 | 13,80 | |

D ist der Durchmesser der Kugel, deren Abstrahlverhalten dem des jeweils betrachteten Zylinders äquivalent ist. Die Parameter für die Selbstabsorption von 1064 keV in Pb sind: $a(E_\gamma) = 0,1397$; $b(E_\gamma) = 0,4098$ und $c(E_\gamma) = 0,0737$.

Die mittlere Zählrate ist $\overline{Z_{ref}(E_\gamma)} = 3,311 \pm 1,028 \text{ c/s}$. Hieraus ergibt sich ein mittlerer Durchmesser $\overline{D_{ref}}$ der Referenzkugeln von 16,87 cm. Die Durchmesser liegen zwischen $D_{min} = 13,80$ cm und $D_{max} = 19,95$ cm.

Beispiel 7

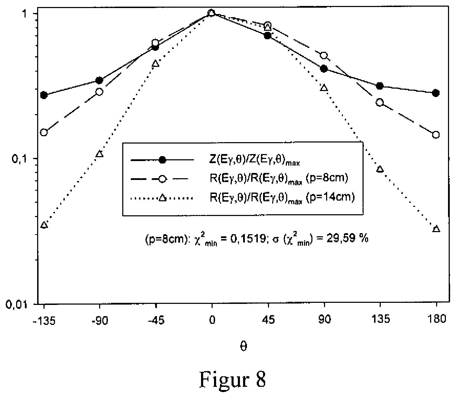

Bestimmung der Gesamtmasse eines 1000 cm$^3$ Pb-Zylinders mit einem Radius von 2 cm und einer Länge von 80 cm bei einer radialen Position von 14 cm vom Fasszentrum und eines 5000 cm$^3$ Pb-Zylinders mit einem Radius von 7,98 cm und einer Länge von 25 cm im Fasszentrum. Die Zylinder liegen in einer Ebene auf halber Höhe des Fasses bei einer radialen Position von 14 cm vom Fasszentrum. Ansonsten ist die Vorgehensweise mit Beispiel 1 identisch. Die Zählraten als Funktion des Rotationswinkels θ sind in Tabelle 9 zusammengefasst. Der Chi-Quadrat-Fit der normierten Zählrateverteilung unter Berücksichtigung der 1-Punktaktivität ist in Figur 8 dargestellt. Der beste Chi-Quadrat-Wert wird für eine mittlere radiale Position von 8 cm erhalten.

Tabelle 9

| Zählraten für einen 1000 cm$^3$ Pb-Zylinder (r = 2 cm/ h = 80 cm) bei einer radialen Position von 14 cm vom Fasszentrum und einen 5000 cm$^3$Pb-Zylinder (r = 7,98 cm/ h =25 cm) im Fasszentrum. | | | | | | | | | |
|---|---|---|---|---|---|---|---|---|---|
| θ | 0 | 45 | 90 | 135 | 180 | 225 | 270 | 315 | |
| $Z(E_\gamma,\theta)$ c/s | 2,740 | 1,605 | 1,213 | 1,077 | 1,069 | 1,348 | 2,30 | 3,943 | $\sum_\nu^n$ 15,295 |
| $Z(E_\gamma,\theta)$ c/s/g | 2,172 10$^{-4}$ | 1,336 10$^{-4}$ | 6,308 10$^{-4}$ | 3,762 10$^{-4}$ | 4,005 10$^{-4}$ | 7,476 10$^{-4}$ | 1,655 10$^{-4}$ | 2,655 10$^{-4}$ | 9,983 10$^{-4}$ |

Der aus der Analyse der normierten Zählrateverteilung mit 1-Punktaktivität erhaltene Durchmesser der Referenzkugel ist d = 36,37 cm und liegt außerhalb des Intervalls [$D_{min}$,$D_{max}$]. Die nach Gleichung (17) berechnete Gesamtmasse der Zylinder ist 77 $\pm$ 28 kg und liegt 13 % höher als der Sollwert, 68 kg. Die in Beispiel 7 angenommene Probe kann somit vergleichsweise gut als abgeschirmte einzelne Gamma-Strahlungsquelle angenähert werden. Dies ist dadurch bedingt, dass ein großer Teil des gesuchten Elements, welches durch den Neutronenbeschuss zur Gammastrahlung angeregt wird, sich im Fasszentrum befindet. Dort trägt es, wenn das Fass gedreht wird, nichts zur Winkelabhängigkeit der Zählrate bei.

**Patentansprüche**

1. Verfahren zur zerstörungsfreien Elementanalyse großvolumiger Proben, wobei

   • die Probe gepulst mit schnellen Neutronen bestrahlt wird,
   • die von der Probe ausgesendete prompte Gammastrahlung gemessen wird und
   • die Menge an einem Element, die in der Probe enthalten ist, nach Abzug des Untergrundsignals aus der Fläche des Photopeaks ausgewertet wird, den das Element in einer Zählrate-Energie-Darstellung hervorruft,

   die Probe um eine Achse gedreht und die Gammastrahlung in Abhängigkeit des Drehwinkels gemessen wird, **dadurch gekennzeichnet, dass** die von einem Teilbereich der Probe, bei dem eine metallische Umhüllung der Probe als Teilbereich gewählt wird, dessen Zusammensetzung bekannt ist, ausgesendete Gammastrahlung zur Bestimmung des Neutronenflusses am Ort der Probe ausgewertet wird.

2. Verfahren nach Anspruch 1, **dadurch gekennzeichnet, dass** aus der Abhängigkeit der Gammastrahlung vom Drehwinkel die radiale Verteilung eines Elements in der Probe relativ zur Drehachse ausgewertet wird.

3. Verfahren nach einem der Ansprüche 1 bis 2, **dadurch gekennzeichnet, dass** die Probe für die Bestimmung der Photopeak-Effizienz des Elements als aus dem Element bestehende, abgeschirmte Punktquelle angenähert wird.

4. Verfahren nach einem der Ansprüche 1 bis 3, **dadurch gekennzeichnet, dass** eine zuvor bestimmte radiale Verteilung des Elements in der Probe relativ zur Drehachse für die Näherung der Probe herangezogen wird.

5. Verfahren nach einem der Ansprüche 1 bis 4, **dadurch gekennzeichnet, dass** mit einer Annahme für eine in der Probe enthaltene Gamma-abschirmende Struktur die Fläche des Photopeaks berechnet und der Vergleich dieser Fläche mit der aus Messergebnissen erhaltenen Fläche als Maß für die Gültigkeit der Annahme ausgewertet wird.

6. Verfahren nach Anspruch 5, **dadurch gekennzeichnet, dass** die Gültigkeit der Annahme über einen Chi-Quadrat-Test der Abweichung zwischen der berechneten und der aus Messergebnissen erhaltenen Fläche des Photopeaks ausgewertet wird.

7. Verfahren nach einem der Ansprüche 1 bis 6, **dadurch gekennzeichnet, dass** die Fläche des Photopeaks auf der Basis eines parametrisierten Ansatzes für die Wirkung einer in der Probe enthaltenen Gamma-abschirmenden Struktur berechnet und die Abweichung dieser Fläche von der aus Messergebnissen enthaltenen Fläche durch Variation der Parameter minimiert wird, insbesondere nach der Chi-Quadrat-Methode.

8. Verfahren nach Anspruch 7, **dadurch gekennzeichnet, dass** Erkenntnisse aus einer zuvor durchgeführten qualitativen Elementanalyse der Probe zur Eingrenzung oder Festlegung der Parameter der Gamma-abschirmenden Struktur herangezogen werden.

9. Verfahren nach einem der vorhergehenden Ansprüche 5 bis 8, **dadurch gekennzeichnet, dass** das erwartete Verhältnis der Photopeakflächen, die von verschiedenen Gamma-Linien des in der Probe gesuchten Elements erzeugt werden, in der Annahme bzw. im parametrisierten Ansatz berücksichtigt wird.

10. Verfahren nach einem der Ansprüche 1 bis 9, **dadurch gekennzeichnet, dass** die Probe gedreht und die Abhängigkeit der von der Probe ausgesendeten Gammastrahlung vom Drehwinkel auf der Basis einer Annahme für die Position eines in der Probe lokal konzentrierten Elements berechnet wird und dass der Vergleich dieser Winkelabhängigkeit mit der aus Messergebnissen erhaltenen Winkelabhängigkeit als Maß für die Gültigkeit der Annahme ausgewertet wird.

11. Verfahren nach Anspruch 10, **dadurch gekennzeichnet, dass** die Gültigkeit der Annahme über einen Chi-Quadrat-Test der Abweichung zwischen der berechneten und der aus Messergebnissen erhaltenen Winkelabhängigkeit ausgewertet wird.

12. Verfahren nach einem der Ansprüche 1 bis 11, **dadurch gekennzeichnet, dass** die Abhängigkeit der von der Probe ausgesendeten Gammastrahlung vom Drehwinkel auf der Basis eines parametrisierten Ansatzes für die Position des lokal konzentrierten Elements in der Probe berechnet und die Abweichung zur aus Messergebnissen erhaltenen Winkelabhängigkeit durch Variation der Parameter minimiert wird, insbesondere nach der Chi-Quadrat-Methode.

13. Verfahren nach einem der vorhergehenden Ansprüche 10 bis 12, **dadurch gekennzeichnet, dass**

   • der Durchmesser einer Kugel aus dem Element berechnet wird, die, wäre sie am Ort der lokalen Konzentration des Elements in der Probe untergebracht, die gemessene Abhängigkeit der ausgesendeten Gammastrahlung vom Drehwinkel zeigen würde, und
   • aus dem Vergleich dieses Durchmessers mit dem Durchmesser einer Referenzkugel aus dem Element, deren Masse bekannt ist, die Gesamtmasse m des lokal in der Probe konzentrierten Elements ausgewertet wird.

14. Verfahren nach Anspruch 13, **dadurch gekennzeichnet, dass** als Referenzkugel diejenige Kugel gewählt wird, die, wäre sie am Ort der lokalen Konzentration des Elements in der Probe untergebracht, die gleiche Abhängigkeit der gemessenen Gammastrahlung vom Drehwinkel zeigen würde wie ein ebendort befindlicher Zylinder aus dem Element mit vorgegebener Geometrie.

15. Verfahren nach einem der Ansprüche 1 bis 14, **dadurch gekennzeichnet, dass** die Gammastrahlung in dem Zeitintervall nach einem Neutronenpuls gemessen wird, in dem mindestens 50 % der Neutronen des Pulses auf Energien zwischen 100 eV und 1 KeV moderiert sind und /oder dass die Gammastrahlung in dem Zeitintervall nach einem Neutronenpuls gemessen wird, in dem mindestens 50 % der Neutronen des Pulses auf Energien unterhalb 1 eV moderiert sind.

**16.** Verfahren nach einem der Ansprüche 1 bis 16, **dadurch gekennzeichnet, dass** die Probe mit Neutronen einer Energie oberhalb 10 MeV bestrahlt wird und/oder dass zumindest ein Teil derjenigen Neutronen, die die Probe durchdringen, in die Probe zurückreflektiert wird.

**Claims**

**1.** Method for non-destructive element analysis of large volume samples, in which

> • the sample is irradiated, pulsed with quick neutrons,
> • the prompt gamma radiation emitted by the sample is measured and
> • the amount of an element, which is contained in the sample, is evaluated after deducting the background signal from the area of the photopeak, which the element causes in a count rate-energy presentation,

the sample is rotated around an axis and the gamma radiation is measured depending on the angle of rotation, **characterised in that**
the gamma radiation emitted by a part area of the sample, in which a metal coating of the sample is selected as a part area, the composition of which is known, is evaluated for determining the neutron flow at the place in the sample.

**2.** Method according to claim 1, **characterised in that** the radial distribution of an element in the sample in relation to the axis of rotation is evaluated from the dependency of the gamma radiation on the angle of rotation.

**3.** Method according to one of claims 1 to 2, **characterised in that** the sample is approximated as a shielded point source consisting of the element for determining the photopeak efficiency of the element.

**4.** Method according to one of claims 1 to 3, **characterised in that** a radial distribution of the element in the sample in relation to the axis of rotation determined beforehand is used for approximating the sample.

**5.** Method according to one of claims 1 to 4, **characterised in that** the area of the photopeak is calculated with an assumption for a gamma shielding structure contained in the sample and the comparison of this area with the area obtained from the measurement results is evaluated as a measure for the validity of the assumption.

**6.** Method according to claim 5, **characterised in that** the validity of the assumption is evaluated through a chi square test of the deviation between the area of the photopeak calculated and obtained from the measurement results.

**7.** Method according to one of claims 1 to 6, **characterised in that** the area of the photopeak is calculated based on a parametric approach for the effect of a gamma shielding structure contained in the sample and the deviation of this area from the area obtained from the measurement results is minimised through varying the parameters, particularly according to the chi square method.

**8.** Method according to claim 7, **characterised in that** the findings from a qualitative element analysis of the sample carried out before is used for delimiting or establishing the parameters of the gamma shielding structure.

**9.** Method according to one of previous claims 5 to 8, **characterised in that** the expected proportion of the photopeak areas that are produced by various gamma lines of the element sought in the sample is taken into consideration in the assumption or parametric approach.

**10.** Method according to one of claims 1 to 9, **characterised in that** the sample is rotated and the dependency of the gamma radiation emitted by the sample on the angle of rotation is calculated based on an assumption for the position of an element concentrated locally in the sample and that the comparison of this angle dependency with the angle dependency obtained from the measurement results is evaluated as a measure for the validity of the assumption.

**11.** Method according to claim 10, **characterised in that** the validity of the assumption is evaluated through a chi square test of the deviation between the angle dependency calculated and obtained from the measurement results.

**12.** Method according to one of claims 1 to 11, **characterised in that** the dependency of the gamma radiation emitted by the sample on the angle of rotation is calculated based on a parametric approach for the position of the element concentrated locally in the sample and the deviation from the angle dependency obtained from the measurement results is minimised through varying the parameters, particularly according to the chi square method.

13. Method according to one of previous claims 10 to 12, **characterised in that**

- the diameter of a ball from the element is calculated, which would show the measured dependency of the gamma radiation emitted on the angle of rotation, if it was put at the place of the local concentration of the element in the sample, and
- the total mass m of the element concentrated locally in the sample is evaluated from the comparison of this diameter with the diameter of a reference ball from the element, the mass of which is known.

14. Method according to claim 13, **characterised in that** the ball selected as reference ball is that, which would show the same dependency of the gamma radiation measured on the angle of rotation as a cylinder from the element with preset geometry located there, if it was at the place of the local concentration of the element.

15. Method according to one of claims 1 to 14, **characterised in that** the gamma radiation is measured in the time interval after a neutron pulse, in which at least 50 % of the neutrons of the pulse are modulated to energies between 100 eV and 1 KeV and /or the gamma radiation is measured in the time interval after a neutron pulse, in which at least 50% of the neutrons of the pulse are modulated to energies below 1 eV.

16. Method according to one of claims 1 to 16, **characterised in that** the sample is irradiated with neutrons of an energy above 10 MeV and/or that at least a part of those neutrons that penetrate the sample are reflected back into the sample.

**Revendications**

1. Procédé servant à l'analyse élémentaire sans destruction d'échantillons à grand volume, dans lequel

- l'échantillon est irradié de manière pulsée avec des neutrons rapides,
- le rayonnement gamma rapide émis par l'échantillon est mesuré, et
- la quantité en un élément contenu dans l'échantillon est évaluée après le retrait du signal de fond de la surface du pic photoélectrique, que l'élément provoque dans une représentation vitesse d'impulsions-énergie, l'échantillon est tourné autour d'un axe et le rayonnement gamma est mesuré en fonction de l'angle de rotation,

**caractérisé en ce que**
le rayonnement gamma émis par une zone partielle de l'échantillon, une enveloppe métallique de l'échantillon étant choisie en tant que zone partielle dont la composition est connue, est évalué afin de définir le flux de neutrons à l'emplacement de l'échantillon.

2. Procédé selon la revendication 1, **caractérisé en ce que** la répartition radiale d'un élément dans l'échantillon par rapport à l'axe de rotation est évaluée à partir de la dépendance du rayonnement gamma de l'angle de rotation.

3. Procédé selon l'une quelconque des revendications 1 à 2, **caractérisé en ce que** l'échantillon est approché en vue de la définition de l'efficacité du pic photoélectrique de l'élément en tant que source ponctuelle constituée de l'élément, protégée.

4. Procédé selon l'une quelconque des revendications 1 à 3, **caractérisé en ce qu'**une répartition radiale définie au préalable de l'élément dans l'échantillon par rapport à l'axe de rotation est prise en compte en vue de l'approximation de l'échantillon.

5. Procédé selon l'une quelconque des revendications 1 à 4, **caractérisé en ce que** la surface du pic photoélectrique est calculée avec une hypothèse pour une structure de protection gamma contenue dans l'échantillon, et la comparaison de ladite surface avec la surface obtenue des résultats de la mesure est évaluée en tant que mesure pour la validité de l'hypothèse.

6. Procédé selon la revendication 5, **caractérisé en ce que** la validité de l'hypothèse est évaluée par l'intermédiaire d'un test du khi carré de l'écart entre la surface calculée et la surface obtenue des résultats de mesure du pic photoélectrique.

**7.** Procédé selon l'une quelconque des revendications 1 à 6, **caractérisé en ce que** la surface du pic photoélectrique est calculée sur la base d'une approche paramétrée pour l'action d'une structure de protection gamma contenue dans l'échantillon, et l'écart entre ladite surface et la surface obtenue à partir des résultats de mesure est minimisé par la variation des paramètres, en particulier selon la méthode du khi carré.

**8.** Procédé selon la revendication 7, **caractérisé en ce que** sont prises en compte des connaissances issues d'une analyse élémentaire qualitative menée au préalable de l'échantillon servant à limiter ou à fixer les paramètres de la structure de protection gamma.

**9.** Procédé selon l'une quelconque des revendications 5 à 8, **caractérisé en ce que** le rapport attendu des surfaces de pic photoélectrique, qui sont produites par différentes lignes gamma de l'élément recherché dans l'échantillon, est pris en compte dans l'hypothèse ou dans l'approche paramétrée.

**10.** Procédé selon l'une quelconque des revendications 1 à 9, **caractérisé en ce que** l'échantillon est tourné et la dépendance entre le rayonnement gamma émis par l'échantillon et l'angle de rotation est calculée sur la base d'une hypothèse pour la position d'un élément localement concentré dans l'échantillon, et que la comparaison de ladite dépendance angulaire et de la dépendance angulaire obtenue des résultats de mesure est évaluée comme la mesure pour la validité de l'hypothèse.

**11.** Procédé selon la revendication 10, **caractérisé en ce que** la validité de l'hypothèse est évaluée par l'intermédiaire d'un test du khi carré de l'écart entre la dépendance angulaire calculée et la dépendance angulaire obtenue des résultats de mesure.

**12.** Procédé selon l'une quelconque des revendications 1 à 11, **caractérisé en ce que** la dépendance entre le rayonnement gamma émis par l'échantillon et l'angle de rotation est calculée sur la base d'une approche paramétrée pour la position de l'élément localement concentré dans l'échantillon, et l'écart par rapport à la dépendance angulaire obtenue des résultats de mesure est minimisé par la variation des paramètres, en particulier selon la méthode du khi carré.

**13.** Procédé selon l'une quelconque des revendications 10 à 12, **caractérisé en ce que**

- le diamètre d'une bille de l'élément est calculé, laquelle, si elle se trouvait à l'emplacement de la concentration locale de l'élément dans l'échantillon, indiquerait la dépendance mesurée entre le rayonnement gamma émis et l'angle de rotation, et
- la masse totale m de l'élément concentré localement dans l'échantillon est évaluée à partir de la comparaison dudit diamètre au diamètre d'une bille de référence de l'élément, dont la masse est connue.

**14.** Procédé selon la revendication 13, **caractérisé en ce qu'**est choisie en tant que bille de référence, la bille, qui précisément, si elle se trouvait à l'emplacement de la concentration locale de l'élément dans l'échantillon, indiquerait la même dépendance entre le rayonnement gamma mesuré et l'angle de rotation tout comme un cylindre se trouvant au même endroit de l'élément présentant une géométrie prédéfinie.

**15.** Procédé selon l'une quelconque des revendications 1 à 14, **caractérisé en ce que** le rayonnement gamma est mesuré après une impulsion de neutrons dans l'intervalle de temps, dans lequel au moins 50 % des neutrons de l'impulsion sont modérés à des énergies comprises entre 100 eV et 1 KeV, et/ou que le rayonnement gamma est mesuré après une impulsion de neutrons dans l'intervalle de temps, dans lequel au moins 50 % des neutrons de l'impulsion sont modérés à des énergies inférieures à 1 eV.

**16.** Procédé selon l'une quelconque des revendications 1 à 16, **caractérisé en ce que** l'échantillon est irradié avec des neutrons d'une énergie supérieure à 10 MeV et/ou qu'au moins une partie des neutrons, qui traversent l'échantillon, est réfléchie dans l'échantillon.

Figur 1a

Figur 1b

Figur 2

Figur 3

Figur 4

Figur 5

Figur 6

Figur 7

Figur 8

**IN DER BESCHREIBUNG AUFGEFÜHRTE DOKUMENTE**

**In der Beschreibung aufgeführte Patentdokumente**

- WO 0107888 A2